# EUROPEAN PATENT SPECIFICATION

(11) **EP 2 547 112 B1**
(45) Date of publication and mention of the grant of the patent: **14.10.2015**
(21) Application number: 12175695.1
(22) Date of filing: 10.07.2012
(51) Int. Cl.: H04N 21/43, H04N 21/431, H04N 13/00, H04N 13/04

(54) **Image display apparatus and method for operating the same**
Bildanzeigevorrichtung und Betriebsverfahren dafür
Appareil d'affichage d'image et procédé de fonctionnement de celui-ci

(30) Priority: 11.07.2011 KR 20110068402
(43) Date of publication of application: 16.01.2013
(73) Proprietor: LG Electronics Inc., Yeongdeungpo-gu Seoul 150-721 (KR)
(72) Inventor: Jeong, Youngho, 137-724 Seoul (KR)
(74) Representative: Cabinet Plasseraud

(56) References cited:
- US-A1- 2005 128 353
- US-A1- 2011 159 929

## Description

### BACKGROUND OF THE INVENTION

### 1. Field of the invention

Embodiments of the invention relate to an image display apparatus and a method for operating the same, and more particularly to an image display apparatus, which is able to increase user convenience, and a method for operating the same.

### 2. Description of the Related Art

An image display apparatus functions to display images to a user. A user can view a broadcast program using an image display apparatus. The image display apparatus can display a broadcast program selected by the user on a display from among broadcast programs transmitted from broadcasting stations. The recent trend in broadcasting is a worldwide transition from analog broadcasting to digital broadcasting.

Digital broadcasting transmits digital audio and video signals. Digital broadcasting offers many advantages over analog broadcasting, such as robustness against noise, less data loss, ease of error correction, and the ability to provide clear, high-definition images. Digital broadcasting also allows interactive viewer services, compared to analog broadcasting.

### SUMMARY OF THE INVENTION

Therefore, the invention has been made in view of the above problems, and it is an object of the invention to provide an image display apparatus, which is able to increase user convenience, and a method for operating the same.

It is another object of the invention to provide an image display apparatus, which is able to enable users to view different images, and a method for operating the same.

In accordance with an aspect of the invention, the above and other objects can be accomplished by the provision of a method for operating an image display apparatus, as defined in independent claim 1.

In accordance with another aspect of the invention, there is provided an image display apparatus as defined in independent claim 7.

Thus, it is possible to increase user convenience.

In particular, if a first viewing device is used when viewing the first image and a second viewing device is used when viewing the second image, the users can respectively view different images.

Since different objects can be respectively displayed in the first and second images by the same input, it is possible to increase user convenience.

If different remote controllers are used, different objects can be respectively displayed in the first and second images. Thus, it is possible to increase user convenience.

Since an object is displayed in any one of the first and second images and an operation corresponding to an input is immediately performed without displaying an object in the other of the first and second images, by different inputs, it is possible to increase user convenience.

### BRIEF DESCRIPTION OF THE DRAWINGS

The above and other objects, features and other advantages of the invention will be more clearly understood from the following detailed description taken in conjunction with the accompanying drawings, in which:
FIG. 1 is a block diagram showing an internal configuration of an image display apparatus according to an embodiment of the invention;
FIGS. 2A and 2B are block diagrams showing internal configurations of a set-top box and a display apparatus according to an embodiment of the invention;
FIG. 3 is a block diagram showing an internal configuration of a controller of FIG. 1;
FIG. 4 is a diagram showing various formats of a 3D image;
FIG. 5 is a diagram showing an operation of a 3D viewing device according to the formats of FIG. 4;
FIG. 6 is a diagram showing various scaling schemes of a 3D image signal according to an embodiment of the invention;
FIG. 7 is a diagram explaining an image formed by a left-eye image and a right-eye image;
FIG. 8 is a diagram explaining depths of a 3D image according to a disparity between a left-eye image and a right-eye image;
FIG. 9 is a diagram showing a method of controlling a remote controller of FIG. 1;
FIG. 10 is a block diagram showing the internal configuration of the remote controller of FIG. 1;
FIG. 11 is a flowchart illustrating a method for operating an image display apparatus; and

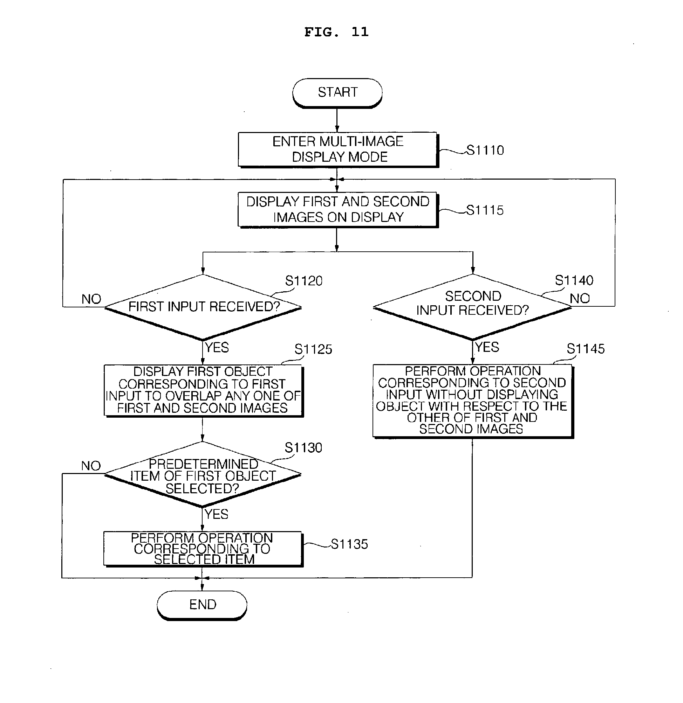

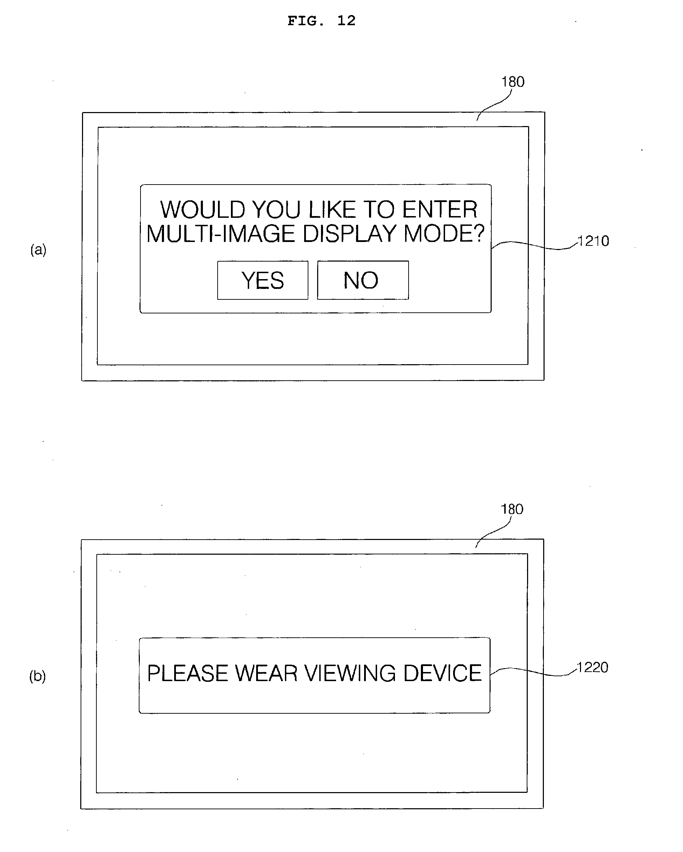

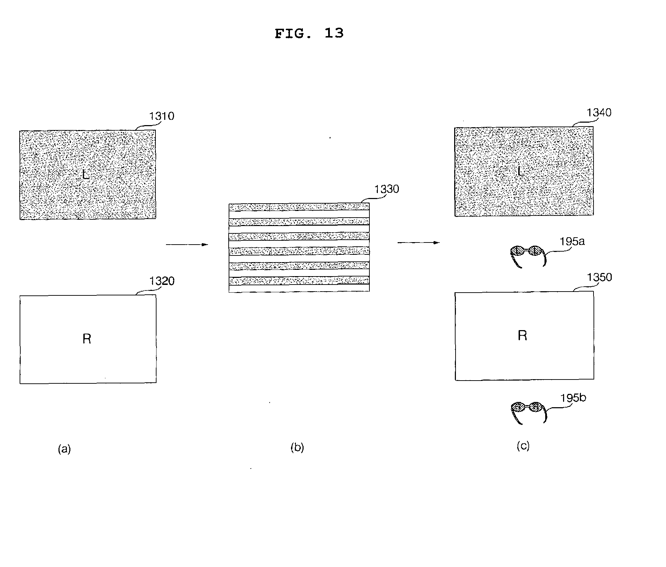

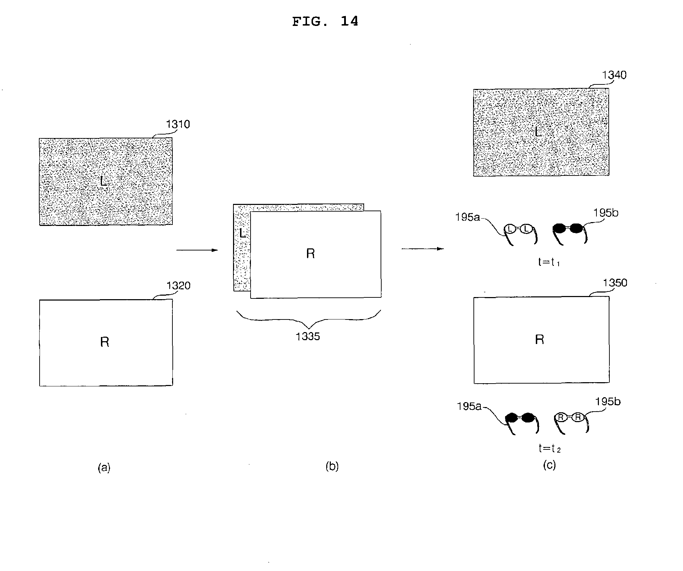

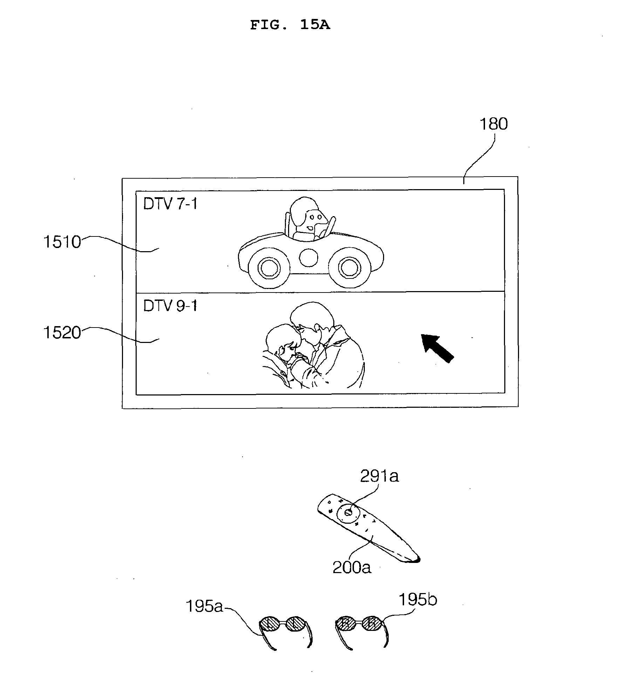

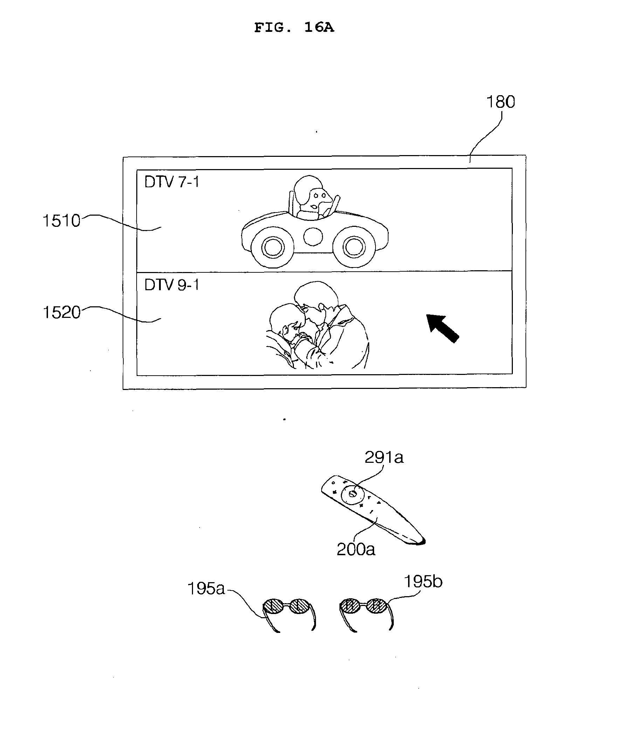

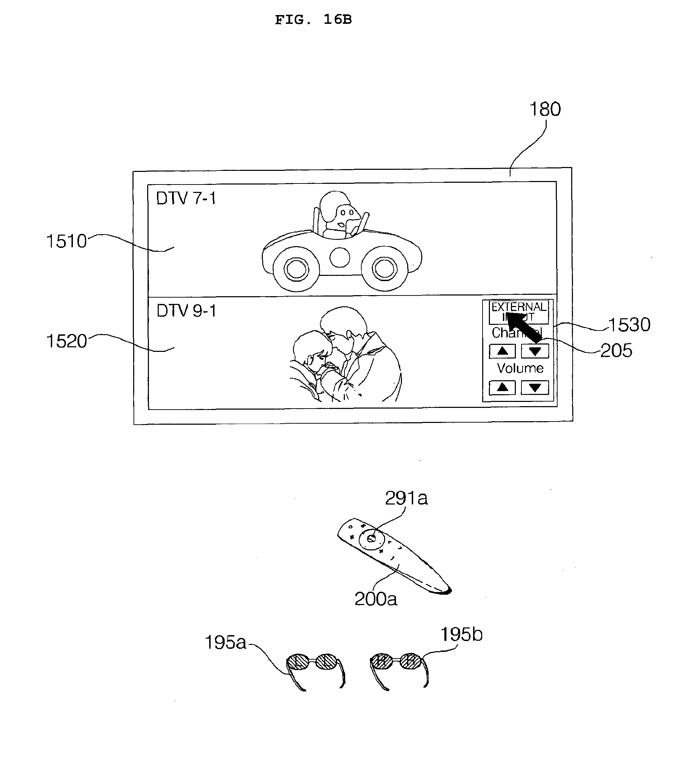

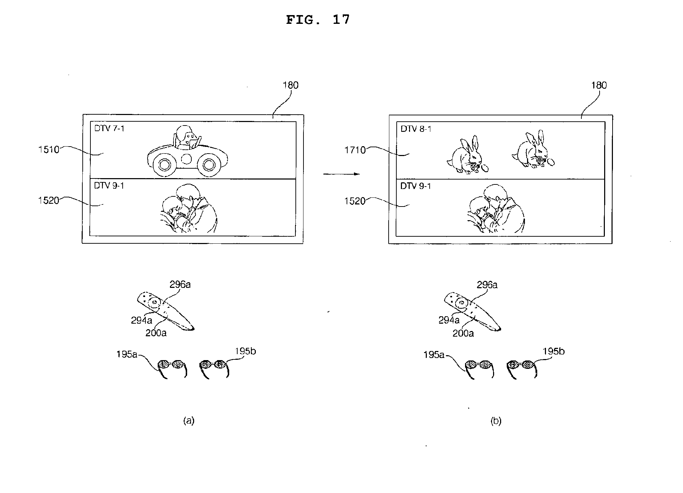

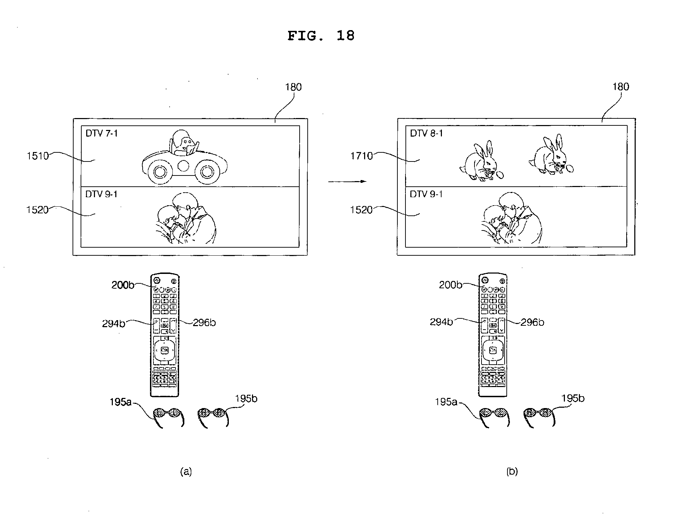

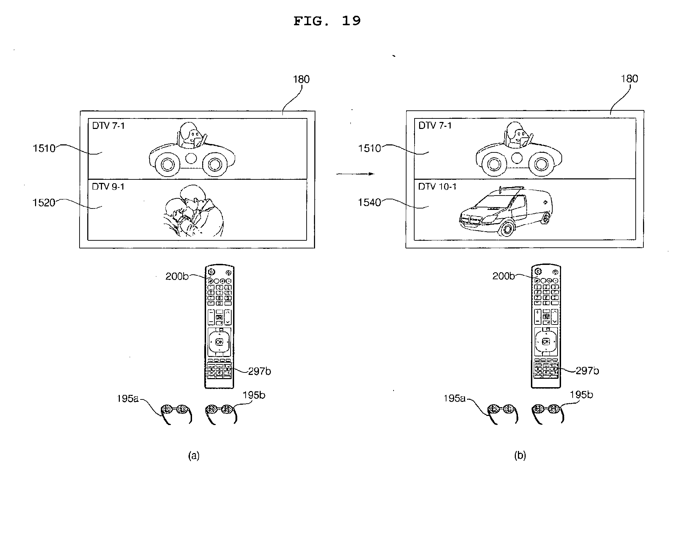

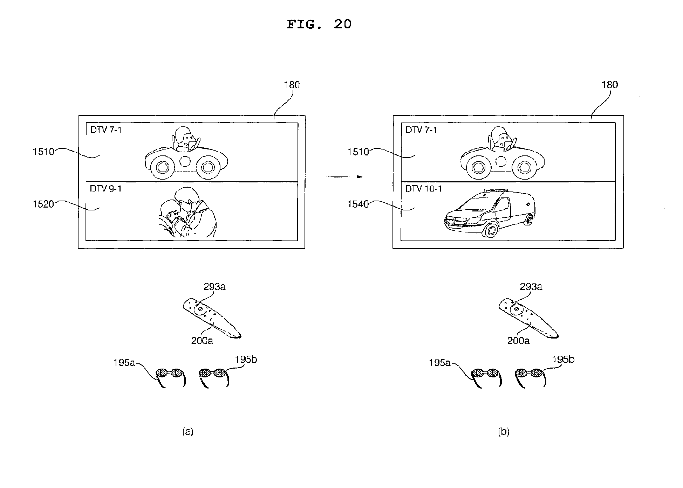

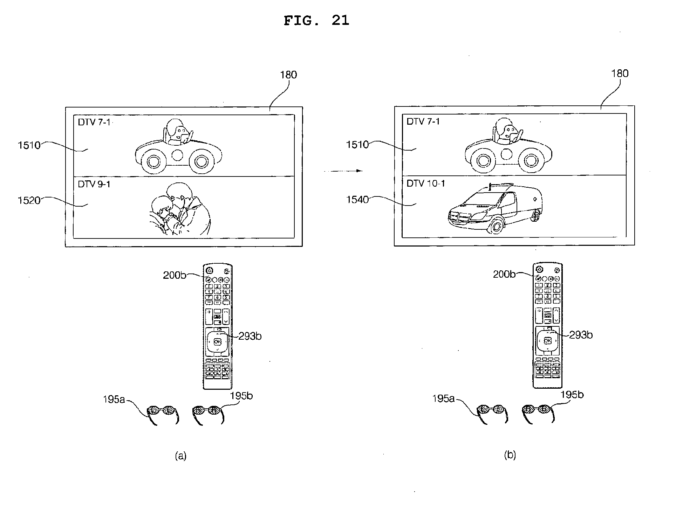

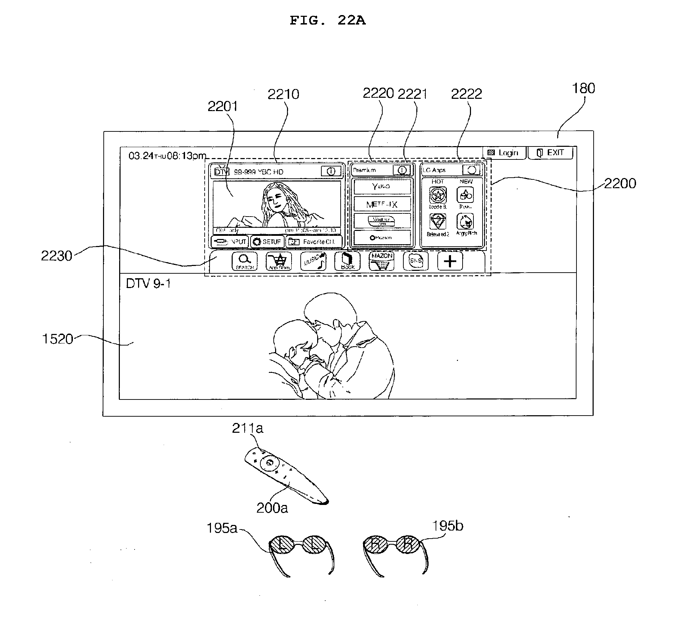

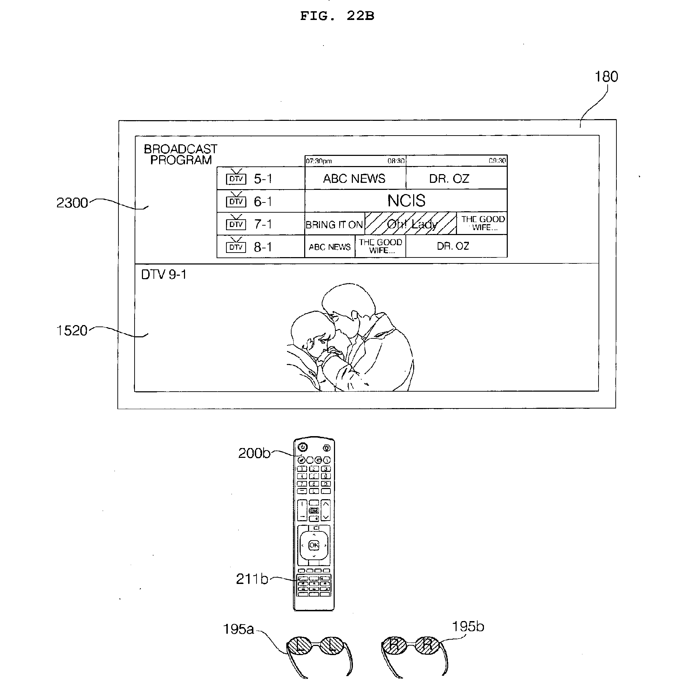

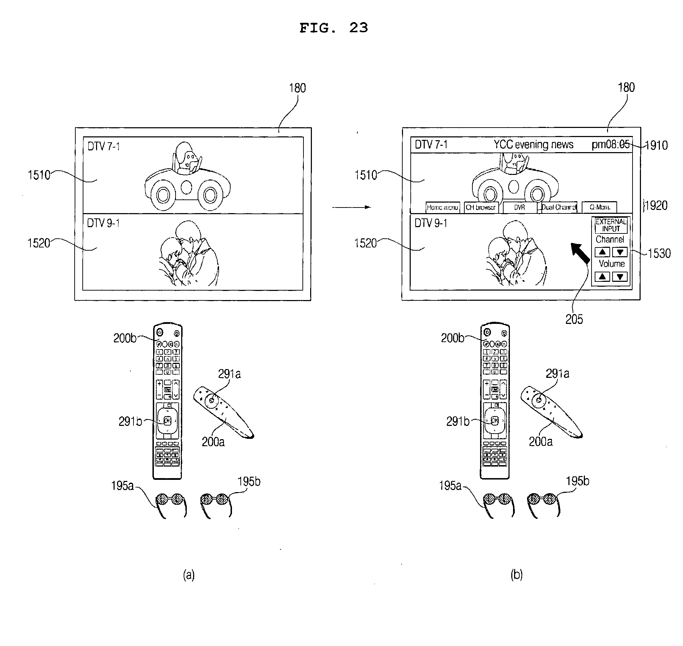

FIGS. 12 to 23 are views referred to for describing various examples of the method for operating the image display apparatus, illustrated in FIG. 11, whereby, FIG. 13 shows image signal processing for viewing multiple images using polarized glasses, FIG. 14 shows image signal processing for viewing multiple images using shutter glasses, FIGS. 15A to 15C show predetermined objects displayed according to manipulation of an OK key of a pointing device, FIGS. 16A to 16C show a case in which an external input item is selected from among a volume control item, a channel control item and an external input item using a pointe corresponding to a movement of a pointing device in a state in which an object is displayed, FIG. 17 shows channel change performed by manipulating a channel control key of a pointing device, FIG. 18 shows channel change performed by manipulating a channel control key of a general remote controller, FIG. 19 shows channel control performed using a PIP channel key of a general remote controller, FIG. 20 shows channel control performed using four direction keys of a pointing device, FIG. 21 shows channel control performed using four direction keys of a general remote controller, FIG. 22A shows a case in which a home screen image is displayed as a first image and a broadcast image is displayed as a second image on a display, FIG. 22B shows a case in which an EPG screen is displayed as a first image and a broadcast image is displayed as a second image on a display, and FIG. 23 shows different objects respectively displayed in first and second images using an OK key of a pointing device and an OK key of a general remote controller.

### DETAILED DESCRIPTION OF THE EMBODIMENTS

Example embodiments of the invention will be described with reference to the attached drawings.

The terms "module" and "unit" used to describe the names of components are used herein to help the understanding of the components and thus they should not be considered as having specific meanings or roles. Accordingly, the terms "module" and "unit" may be interchangeable in their use.

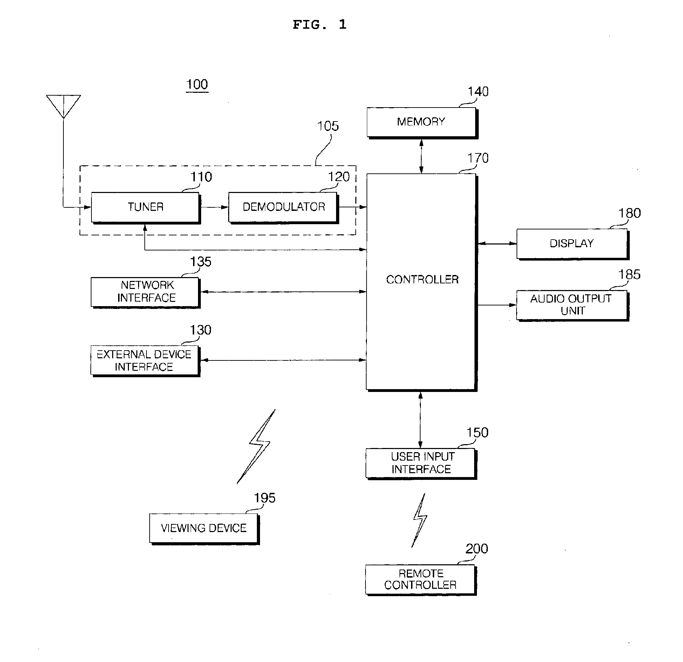

FIG. 1 a diagram showing the internal configuration of an image display apparatus according to an embodiment of the invention.

Referring to FIG. 1, an image display apparatus 100 according to the embodiment of the invention includes a broadcast reception unit 105, an external device interface 130, a memory 140, a user input interface 150, a sensor unit, a controller 170, a display 180, an audio output unit 185, and a viewing device 195.

The broadcast reception unit 105 may include a tuner unit 110, a demodulator 120 and/or a network interface (an external device interface) 130. Of course, as necessary, the broadcast reception unit 105 may include only the tuner unit 110 and the demodulator 120 or may include only the network interface 130.

The tuner unit 110 tunes to a Radio Frequency (RF) broadcast signal corresponding to a channel selected by a user from among RF broadcast signals received through an antenna or RF broadcast signals corresponding to all channels previously stored in the image display apparatus. The tuned RF broadcast is converted into an Intermediate Frequency (IF) signal or a baseband Audio/Video (AV) signal.

For example, the tuned RF broadcast signal is converted into a digital IF signal DIF if it is a digital broadcast signal and is converted into an analog baseband AV signal (Composite Video Banking Sync/Sound Intermediate Frequency (CVBS/SIF)) if it is an analog broadcast signal. That is, the tuner unit 110 may process a digital broadcast signal or an analog broadcast signal. The analog baseband AV signal (CVBS/SIF) output from the tuner unit 110 may be directly input to the controller 170.

In addition, the tuner unit 110 may be capable of receiving RF broadcast signals from an Advanced Television Systems Committee (ATSC) single-carrier system or from a Digital Video Broadcasting (DVB) multi-carrier system.

The tuner unit 110 may sequentially select a number of RF broadcast signals corresponding to all broadcast channels previously stored in the image display apparatus by a channel storage function from a plurality of RF signals received through the antenna and may convert the selected RF broadcast signals into IF signals or baseband A/V signals.

The tuner unit 110 may include a plurality of tuners in order to receive broadcast signals of a plurality of channels. Alternatively, the tuner unit 110 may be a single tuner which simultaneously receives broadcast signals of a plurality of channels.

The demodulator 120 receives the digital IF signal DIF from the tuner unit 110 and demodulates the digital IF signal DIF.

The demodulator 120 may perform demodulation and channel decoding, thereby obtaining a stream signal TS. The stream signal TS may be a signal in which a video signal, an audio signal and a data signal are multiplexed.

The stream signal output from the demodulator 120 may be input to the controller 170 and thus subjected to demultiplexing and A/V signal processing. The processed video and audio signals are output to the display 180 and the audio output unit 185, respectively.

The external device interface 130 may serve as an interface between an external device 190 and the image display apparatus 100. For interfacing, the external device interface 130 may include an A/V Input/Output (I/O) unit and/or a wireless communication module.

The external device interface 130 may be connected to an external device such as a Digital Versatile Disk (DVD) player, a Blu-ray player, a game console, a camera, a camcorder, or a computer (e.g., a laptop computer), wirelessly or by wire and may receive or transmit data from or to the external device.

The A/V I/O unit may receive a video and audio signal of an external device. The wireless communication module may perform short-range wireless communication with other electronic devices.

The network interface 135 serves as an interface between the image display apparatus 100 and a wired/wireless network such as the Internet. The network interface 135 may receive content or data provided by an Internet or content provider or a network operator over a network.

The memory 140 may store various programs necessary for the controller 170 to process and control signals, and may also store processed video, audio and data signals.

The memory 140 may temporarily store a video, audio and/or data signal received from the external device interface 130. The memory 140 may store information about a predetermined broadcast channel by the channel storage function.

While the memory 140 is shown in FIG. 1 as configured separately from the controller 170, to which embodiments of the invention are not limited, the memory 140 may be incorporated into the controller 170.

The user input interface 150 transmits a signal input by the user to the controller 170 or transmits a signal received from the controller 170 to the user.

For example, the user input interface 150 may transmit or receive various user input signals such as a power-on/off signal, a channel selection signal, and a screen setting signal to or from a remote controller 200, transmit a user input signal input by a local key such as a power key, a channel key, a volume key and a setting key to the controller 170, transmit a user input signal received by a sensor unit for sensing a user gesture to the controller 170, or transmit a signal from the controller 170 to the sensor unit.

The controller 170 may demultiplex the stream signal TS received from the tuner unit 110, the demodulator 120, or the external device interface 130 into a number of signals, process the demultiplexed signals into audio and video data, and outputs the audio and video data.

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

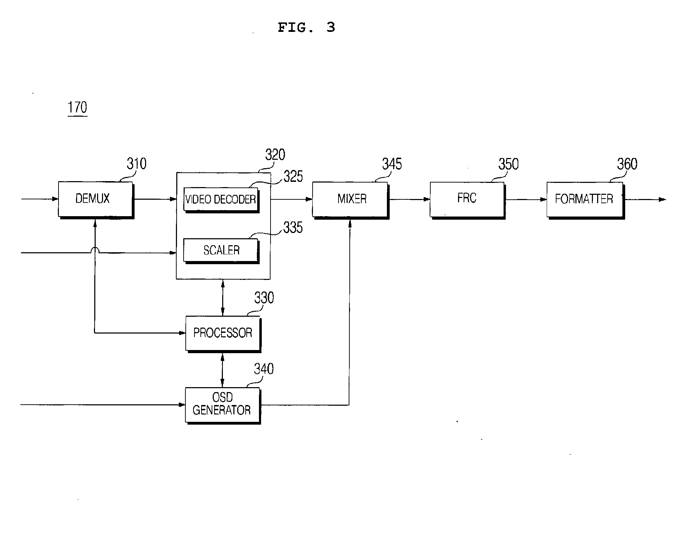

The controller 170 may include a DEMUX, a video processor, etc., which will be described in detail later with reference to FIG. 3.

The controller 170 may control the overall operation of the image display apparatus 100. For example, the controller 170 controls the tuner unit 110 to tune to an RF signal corresponding to a channel selected by the user or a previously stored channel.

The controller 170 may control the image display apparatus 100 by a user command input through the user input interface 150 or an internal program.

The controller 170 may control the display 180 to display images. The image displayed on the display 180 may be a Two-Dimensional (2D) or Three-Dimensional (3D) still image or moving picture.

The controller 170 may generate and display a 3D object with respect to a predetermined object among images displayed on the display 180. For example, the object may be at least one of an accessed web screen (newspaper, magazine, etc.), an EPG, various menus, a widget, an icon, a still image, a moving image, or a text file.

The 3D object may be processed to have a depth different from an image displayed on the display 180. Preferably, but not necessarily, the 3D object may be processed to appear to protrude or recede from an image displayed on the display 180.

The controller 170 recognizes the position of the user based on an image captured by a camera unit. For example, a distance (z-axis coordinate) between the user and the image display apparatus 100 may be detected. An x-axis coordinate and a y-axis coordinate in the image display apparatus 100 corresponding to the position of the user may be detected.

The controller 170 may perform signal processing so as to allow the user to view an image using a display device. For example, if the sensor unit or the camera unit detects whether the viewing device 195 is present or operated or the number of viewing devices, the controller 170 may perform signal processing to be paired with the viewing device 195. That is, the controller 170 may control the output of a pairing signal to the viewing device 195 and control the reception of a response signal from the viewing device 195.

The controller 170 may control the tuner unit 110 to receive a broadcast image according to the number of viewing devices 195. For example, if the number of viewing devices is 2, the controller 170 may control the tuner unit 110 including a plurality of tuners to receive broadcast images of different channels. The controller 170 may perform synchronization with the viewing devices such that the respective broadcast images are displayed at the same time or at different times.

The broadcast image received by one of the plurality of tuners may be input to and processed by the below-described channel browsing processor, in order to display a thumbnail list using the channel browsing processor.

The controller 170 may receive external input images according to the number of viewing devices. For example, if the number of viewing devices is 2, the controller 170 may control reception of a broadcast image and an external input image from an optical device such as a DVD. The controller 170 may perform synchronization with the viewing devices such that the respective images (the broadcast image and the DVD image) are displayed at the same time or at different times.

The controller 170 may increase the vertical synchronization frequency Vsync of a displayed image whenever the number of viewing devices is increased while displaying the image such that the respective images are displayed. This is only applicable to the below-described frame sequential format.

The controller 170 may differently set a viewable image search object, for example, a channel search object of a broadcast image, according to viewing devices. For example, when searching for a channel, the channel search object may be differently set according to age groups such as an adult or a child. The channel search object may be differently set according to taste, gender, recent viewing channels or program rating.

When the same image is selected in the first viewing device and the second viewing device, the controller 170 may control transmission of a message indicating that the same image is selected. This message may be displayed on the display 180 in the form of an object.

A channel browsing processor for generating a thumbnail image corresponding to a channel signal or an external input signal may be further included. The channel browsing processor may receive the stream signal TS output from the demodulator 120 or the stream signal output from the external device interface 130, extract an image from the received stream signal, and generate a thumbnail image. The generated thumbnail image may be input to the controller 170 along with the decoded image in a state of being decoded. The controller 170 may display a thumbnail list including a plurality of thumbnail images on the display 180 using the input thumbnail image.

The thumbnail list may be displayed in a brief view method of displaying the thumbnail list in a part of an area in a state of displaying a predetermined image on the display 180 or may be displayed in a full viewing method of displaying the thumbnail list in a full area of the display 180. The thumbnail images of the thumbnail list may be sequentially updated.

The display 180 converts the video signal, the data signal, the OSD signal and the control signal processed by the controller 170 or the video signal, the data signal and the control signal received by the external device interface 130 and generates a driving signal.

The display 180 may be a Plasma Display Panel (PDP), a Liquid Crystal Display (LCD), an Organic Light-Emitting Diode (OLED) display or a flexible display. In particular, the display 180 may be a 3D display or a device capable of displaying an image in 3D.

For viewing or displaying a 3D image, a method thereof for the display 180 may be divided into a supplementary display method and a single display method.

In the single display method, a 3D image is implemented on the display 180 without a separate subsidiary device, for example, glasses. The single display method may include, for example, a lenticular method, a parallax barrier, or the like.

In the supplementary display method, a 3D image is implemented on the display 180 using a subsidiary device. The supplementary display method includes various methods such as a Head-Mounted Display (HMD) method or a glasses method.

The glasses method may be divided into a passive method such as a polarized glasses method and an active method such as a shutter glasses method. The HMD method may be divided into a passive method and an active method.

The 3D viewing device 195 may be 3D glasses capable of viewing a 3D image. The 3D glasses 195 may include passive polarized glasses or active shutter glasses and may also include the above-described HMD method.

For example, if the viewing device 195 is polarized glasses, a left-eye glass may be implemented by a left-eye polarized glass and a right-eye glass may be implemented by a right-eye polarized glass.

As another example, if the viewing device 195 is shutter glasses, left-eye and right-eye glasses may be alternately opened or closed.

The viewing device 195 may be 2D capable glasses capable of allowing users to view different images. For example, if the viewing device 195 is polarized glasses, the viewing device may be implemented by the same polarized glasses. That is, both the left-eye and the right-eye glasses of the first viewing device 195a include glasses polarized in a first direction and the left-eye and right-eye glasses of the second viewing device 195b may include right-eye polarized glasses polarized in a second direction different from the first direction.

As another example, if the viewing device 195 is shutter glasses, the glasses may be opened or closed at the same time. That is, both the left-eye and right-eye glasses of the first viewing device 195a may be opened for a first time (a first period or point of time) and closed for a second time (a second period or point of time), and both the left-eye and right-eye glasses of the second viewing device 195b may be closed for a first time (a first period or point of time) and opened for a second time (a second period or point of time).

If the display 180 is a touch screen, the display 180 may function as not only an output device but also as an input device.

The audio output unit 185 receives the audio signal processed by the controller 170 and outputs the received audio signal as sound.

The camera unit captures the image of the user. Although the cameral unit may include one camera, the invention is not limited thereto and the camera unit may include a plurality of cameras. The camera unit may be disposed on the display 180 or may be separately provided. The image information captured by the camera unit is input to the controller 170.

The control unit 170 may sense the user gesture by the image captured by the camera unit, the signal sensed by the sensor unit, or a combination thereof.

The remote controller 200 transmits a user input to the user input interface 150. For transmission of user input, the remote controller 200 may use various communication techniques such as IR communication, RF communication, Bluetooth, Ultra Wideband (UWB) and ZigBee. Other techniques may be use. In addition, the remote controller 200 may receive a video signal, an audio signal or a data signal from the user input interface 150 and output the received signals visually or audibly. The above-described image display apparatus 100 may be a fixed or mobile digital broadcast receiver.

The image display apparatus described herein may include a TV receiver, a projector, a monitor, a mobile phone, a smart phone, a notebook computer, a digital broadcast terminal, a Personal Digital Assistant (PDA), a Portable Multimedia Player (PMP), etc.

The block diagram of the image display apparatus 100 illustrated in FIG. 1 is only by example. Depending upon the specifications of the image display apparatus 100 in actual implementation, the components of the image display apparatus 100 may be combined or omitted, or new components may be added. That is, two or more components may be incorporated into one component or one component may be configured as separate components, as needed or desired.

Unlike the embodiment of the invention shown in FIG. 1, in other embodiments of the image display apparatus 100 may optionally not include the tuner unit 110 and the demodulator 120 shown in FIG. 1, and may instead receive image content through the network interface 130 or the external device interface 135 and reproduce the image content.

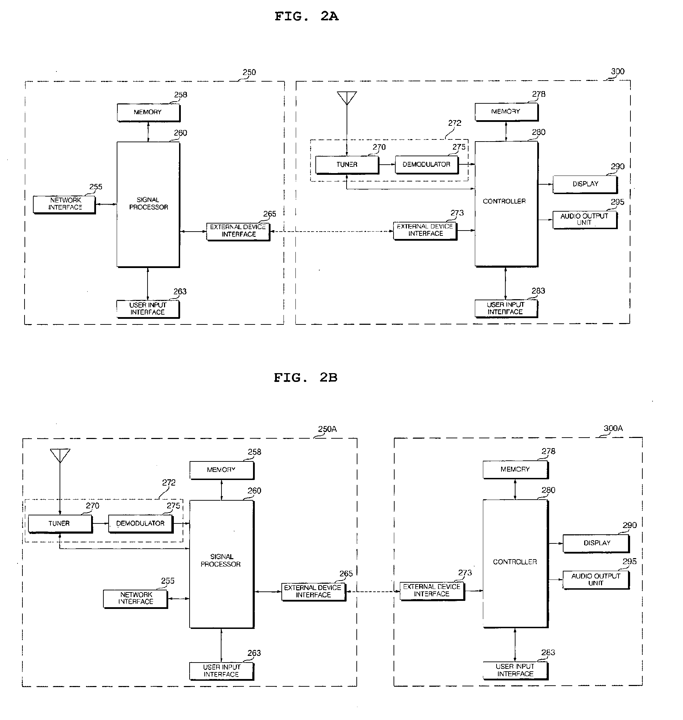

The image display apparatus 100 is an example of an image signal processing apparatus that processes an image stored in the apparatus or an input image. Other examples of the image signal processing apparatus include a set-top box without the display 180 and the audio output unit 185, a DVD player, a Blu-ray player, a game console, and a computer, for example. The set-top box will be described later with reference to FIGS. 2A and 2B.

FIGS. 2A and 2B are block diagrams showing internal configurations of a set-top box and a display device according to an embodiment of the invention.

Referring to FIG. 2A, a set-top box 250 and a display device 300 may transmit or receive data wirelessly or by wire. Hereinafter, a difference between FIG. 2A and FIG. 1 will be focused upon.

The set-top box 250 may include a network interface 255, a memory 258, a signal processor 260, a user input interface 263, and an external device interface 265.

The network interface 255 serves as an interface between the set-top box 250 and a wired/wireless network such as the Internet. The network interface 255 may transmit data to or receive data from another user or another electronic device over a connected network or over another network linked to the connected network.

The memory 258 may store programs necessary for the signal processor 260 to process and control signals and temporarily store a video, audio and/or data signal received from the external device interface 265 or the network interface 255.

The signal processor 260 processes an input signal. For example, the signal processor 260 may demultiplex or decode an input video or audio signal. For signal processing, the signal processor 260 may include a video decoder or an audio decoder. The processed video or audio signal may be transmitted to the display device 300 through the external device interface 265.

The user input interface 263 transmits a signal received from the user to the signal processor 260 or a signal received from the signal processor 260 to the user. For example, the user input interface 263 may receive various control signals such as a power on/off signal, an operation input signal, and a setting input signal through a local key or the remote controller 200 and output the control signals to the signal processor 260.

The external device interface 265 serves as an interface between the set-top box 250 and an external device that is connected wirelessly or by wire, particularly the display device 300, for signal transmission or reception. The external device interface 265 may also interface with an external device such as a game console, a camera, a camcorder, and a computer (e.g. a laptop computer), for data transmission or reception.

The set-top box 250 may further include a media input unit for media playback. The media input unit may be a Blu-ray input unit, for example. That is, the set-top box 250 may include a Blu-ray player. After signal processing such as demultiplexing or decoding in the signal processor 260, a media signal from a Blu-ray disk may be transmitted to the display device 300 through the external device interface 265 so as to be displayed on the display device 300.

The display device 300 may include a broadcast reception unit 272, an external device interface 273, a memory 278, a controller 280, a user input interface 283, a display 290, and an audio output unit 295. The broadcast reception unit 272 may include a tuner 270 and a demodulator 275.

The tuner 270, the demodulator 275, the memory 278, the controller 280, the user input interface 283, the display 290, and the audio output unit 295 are identical respectively to the tuner unit 110, the demodulator 120, the memory 140, the controller 170, the user input interface 150, the display 180, and the audio output unit 185 illustrated in FIG. 1 and thus a description thereof is not provided herein.

The external device interface 273 serves as an interface between the display device 300 and a wireless or wired external device, particularly the set-top box 250, for data transmission or reception.

Hence, a video signal or an audio signal received through the set-top box 250 is output through the display 290 or the audio output unit 295 under the control of the controller 280.

Referring to FIG. 2B, the configuration of the set-top box 250A and the display device 300A illustrated in FIG. 2B is similar to that of the set-top box 250A and the display device 300A illustrated in FIG. 2A, except that the broadcast reception unit 272 resides in the set-top box 250A, not in the display device 300A. The broadcast reception unit 272 may further include a network interface 255. Hereinafter, such difference will be focused upon.

The signal processor 260 may process a broadcast signal received through the tuner 270 and the demodulator 275. The user input interface 263 may receive a channel selection input, a channel store input, etc.

In the set-top box 250 and 250A of FIGS. 2A and 2B, a separate audio output unit may be included in a manner similar to the audio output unit 185 of FIG. 1.

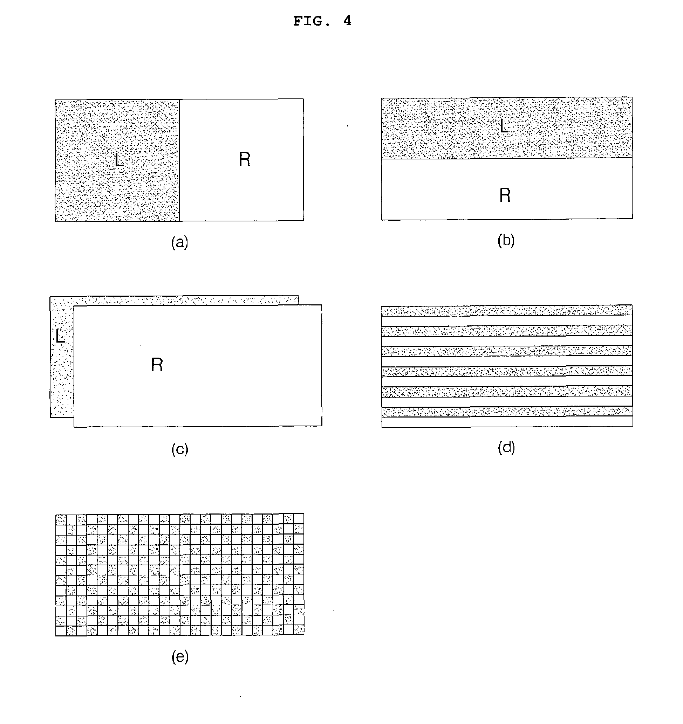

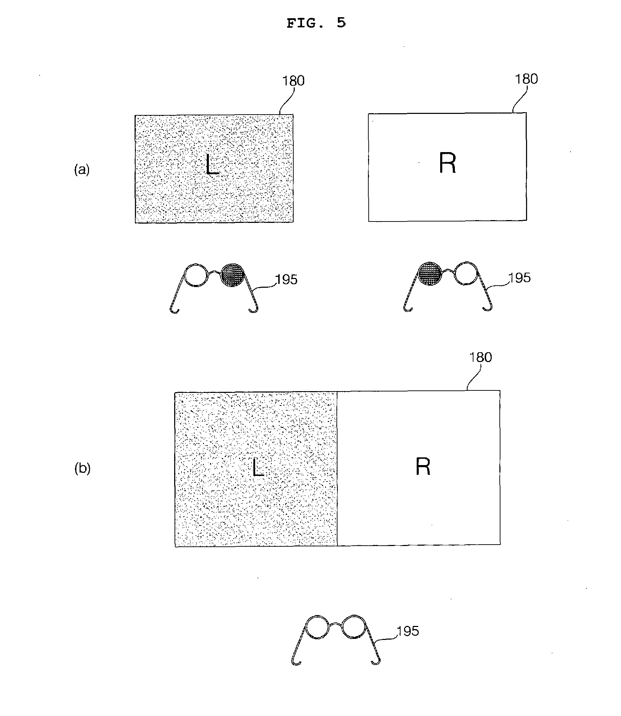

FIG. 3 is a block diagram showing the internal configuration of the controller illustrated in FIG. 1, FIG. 4 is a diagram showing various formats of a 3D image, and FIG. 5 is a diagram showing an operation of a 3D viewing device according to the formats of FIG. 4.

Referring to FIG. 3, the controller 170 according to the embodiment of the invention may include a DEMUX 310, a video processor 320, an OSD generator 340, a mixer 345, a Frame Rate Converter (FRC) 350, and a formatter 360. The controller 170 may further include an audio processor and a data processor.

The DEMUX 310 demultiplexes an input stream. For example, the DEMUX 310 may demultiplex an MPEG-2 TS into a video signal, an audio signal, and a data signal. The input stream signal may be received from the tuner unit 110, the demodulator 120 or the external device interface 130.

The video processor 320 may process the demultiplexed video signal. For video signal processing, the video processor 320 may include a video decoder 325 and a scaler 335.

The video decoder 325 decodes the demultiplexed video signal and the scaler 335 scales the resolution of the decoded video signal so that the video signal can be displayed on the display 180. The video decoder 325 may be provided with decoders that operate based on various standards.

The video signal decoded by the video processor 320 may include a 2D video signal, a mixture of a 2D video signal and a 3D video signal, or a 3D video signal. For example, an external video signal received from the external device 190 or a broadcast video signal received from the tuner unit 110 includes a 2D video signal, a mixture of a 2D video signal and a 3D video signal, or a 3D video signal. Thus, the controller 170 and, more particularly, the video processor 320 may perform signal processing and output a 2D video signal, a mixture of a 2D video signal and a 3D video signal, or a 3D video signal.

The decoded video signal from the video processor 320 may have any of various available formats. For example, the decoded video signal may be a 3D video signal with a color image and a depth image or a 3D video signal with multi-viewpoint image signals. The multi-viewpoint image signals may include, for example, a left-eye image signal and a right-eye image signal.

Formats of the 3D video signal may include a side-by-side format ((a) of FIG. 4) in which the left-eye image L and the right-eye image R are arranged in a horizontal direction, a top/down format ((b) of FIG. 4) in which the left-eye image and the right-eye image are arranged in a vertical direction, a frame sequential format ((c) of FIG. 4) in which the left-eye image and the right-eye image are time-divisionally arranged, an interlaced format ((d) of FIG. 4) in which the left-eye image and the right-eye image are mixed in line units, and a checker box format ((e) of FIG. 4) in which the left-eye image and the right-eye image are mixed in box units.

The processor 330 may control the overall operation of the image display apparatus 100 or the controller 170. For example, the processor 330 controls the tuner unit 110 to tune to a RF broadcast corresponding to a channel selected by a user or a previously stored channel.

The processor 330 may control the image display apparatus 100 by a user command input through the user input interface 150 or an internal program. The processor 330 may control transmission or reception of data to or from the network interface 135 or the external device interface 130. The processor 330 may control the operations of the DEMUX 310, the image processor 320 and the OSD generator 340 of the controller 170.

The OSD generator 340 generates an OSD signal autonomously or according to a user input. For example, the OSD generator 340 may generate signals by which a variety of information is displayed as graphics or text on the display 180, according to user input signals. The OSD signal may include various data such as a User Interface (UI), a variety of menus, widgets, icons, etc. Also, the OSD signal may include a 2D object and/or a 3D object.

The OSD generator 340 may generate a pointer which may be displayed on the display, based on a pointing signal received from the remote controller 200. In particular, such a pointer may be generated by a pointing signal processor. The OSD generator 340 may include such a pointing signal processor. The pointing signal processor may be not provided in the OSD generator 340 and may be provided separately from the OSD generator 340.

The mixer 345 may mix the decoded video signal processed by the video processor 320 with the OSD signal generated by the OSD generator 340. The OSD signal and the decoded video signal each may include at least one of a 2D signal or a 3D signal. The mixed video signal is provided to the FRC 350.

The FRC 350 may change the frame rate of the received video signal. The FRC 350 may output an input frame rate without frame rate conversion.

The formatter 360 may arrange a left-eye video frame and a right-eye video frame of the 3D video signal subjected to frame rate conversion. The formatter 360 may output a synchronization signal Vsync for opening the left-eye glass and the right-eye glass of the 3D viewing device 195.

The formatter 360 may separate a 2D video signal and a 3D video signal from the mixed video signal of the OSD signal and the decoded video signal received from the mixer 345.

Herein, a 3D video signal refers to a signal including a 3D object such as a Picture-In-Picture (PIP) image (still or moving), an EPG that describes broadcast programs, various menus, a widget, text, an object within an image, a person, a background, or a Web page (e.g. from a newspaper, a magazine, etc.).

The formatter 360 may change the format of the 3D video signal, for example, to one of the various formats illustrated in FIG. 4. As shown in FIG. 5, an operation of a 3D viewing device of a glasses type may be performed according to the format.

(a) of FIG. 5 illustrates an example operation of the 3D viewing device 195 and, more particularly, the shutter glasses 195 in the case where the formatter 360 outputs the frame sequential format illustrated in FIG. 4.

When the left-eye image L is displayed on the display 180, the left lens of the shutter glasses 195 is opened and the right lens is closed. When the right-eye image R is displayed on the display 180, the left lens of the shutter glasses 195 is closed and the right lens is opened.

(b) of FIG. 5 illustrates an example operation of the 3D viewing device 195 and, more particularly, the polarized glasses 195 in the case where the formatter 360 outputs the side-by-side format illustrated in FIG. 4. The 3D viewing device 195 illustrated in (b) of FIG. 5 may be shutter glasses. The shutter glasses may operate like the polarized glasses by maintaining both the left-eye lens and the right-eye lens in an open state.

Meanwhile, the formatter 360 may convert a 2D video signal into a 3D video signal. For example, the formatter 360 may detect edges or a selectable object from the 2D video signal and generate a 3D video signal with an object based on the detected edges or the selectable object. As described before, the 3D video signal may be separated into left-eye and right-eye image signals L and R.

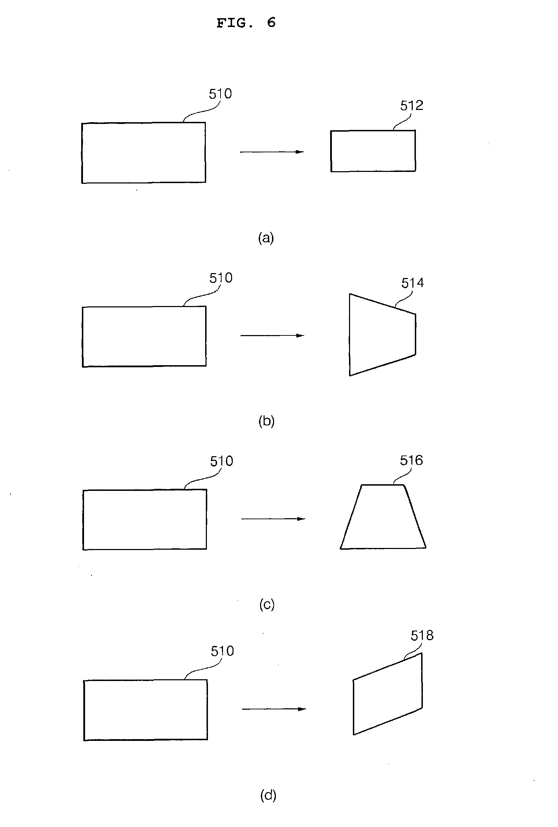

A 3D processor for 3D effect signal processing may be further provided next to the formatter 360. The 3D processor may control brightness, tint, and color of the video signal, for 3D effect improvement. For example, a short-distance video signal may be clearly processed and a long-distance video signal may be blurredly processed. The function of the 3D processor may be incorporated into the formatter 30 or the video processor 320, which will be described later with reference to FIG. 6.

The audio processor of the controller 170 may process the demultiplexed audio signal. For audio processing, the audio processor may include various decoders.

The audio processor of the controller 170 may control bass, treble, and volume of the audio signal.

The data processor of the controller 170 may process the demultiplexed data signal. For example, if the demultiplexed data signal was encoded, the data processor may decode the data signal. The encoded data signal may be Electronic Program Guide (EPG) information including broadcasting information such as the starts, ends, etc., of broadcast programs of each channel.

Although the signals from the OSD generator 340 and the video processor 320 are mixed by the mixer 345 and then are subjected to 3D processing by the formatter 360 in FIG. 3, embodiments of the invention are not limited thereto and the mixer may be located at the next stage of the formatter. That is, the formatter 360 may perform 3D processing with respect to the output of the video processor 320, the OSD generator 340 may perform OSD generation and 3D processing, and then the mixer 345 may mix the processed 3D signals.

The block diagram of the controller 170 shown in FIG. 3 is by example. The components of the block diagrams may be integrated or omitted, or a new component may be added.

In particular, the FRC 350 and the formatter 360 may be not provided in the controller 170 and may be provided separately from the controller 170.

FIG. 6 is a diagram showing various scaling schemes of a 3D image signal according to an embodiment of the invention. Referring to FIG. 6, in order to increase the 3D effect, the controller 170 may perform 3D effect signal processing. In particular, the size or slope of a 3D object in a 3D image may be controlled.

A 3D video signal or a 3D object 510 of the 3D video signal may be enlarged or reduced to a predetermined ratio (512) as shown in (a) of FIG. 6 or the 3D object may be partially enlarged or reduced (trapezoids 514 and 516) as shown in (b) and (c) of FIG. 6. As shown in (d) of FIG. 6, the 3D object may be at least partially rotated (parallelogram 518). By scaling (size control) or slope control, the 3D effect of the 3D image or the 3D object of the 3D image may be increased.

As the slope is increased, a difference between the lengths of both parallel sides of the trapezoids 514 and 516 may be increased as shown in (b) or (c) in FIG. 6 or a rotation angle is increased as shown in (d) of FIG. 6.

Size control or slope control may be performed after the 3D video signal is converted into a predetermined format by the formatter 360 or may be performed by the scaler of the video processor 320. In addition, the OSD generator 340 may generate an OSD signal so as to generate an object in shapes shown in FIG. 6, in order to increase the 3D effect.

As signal processing for the 3D effect, signal processing such as control of brightness, tint, and color of the video signal or the object may be performed in addition to size control or slope control shown in FIG. 6. For example, a short-distance video signal may be clearly processed and a long-distance video signal may be blurredly processed. Signal processing for the 3D effect may be performed by the controller 170 or a separate 3D processor. If signal processing for the 3D effect is performed by the controller 170, signal processing for the 3D effect may be performed by the formatter 360 or the video processor 320 along with size control or slope control.

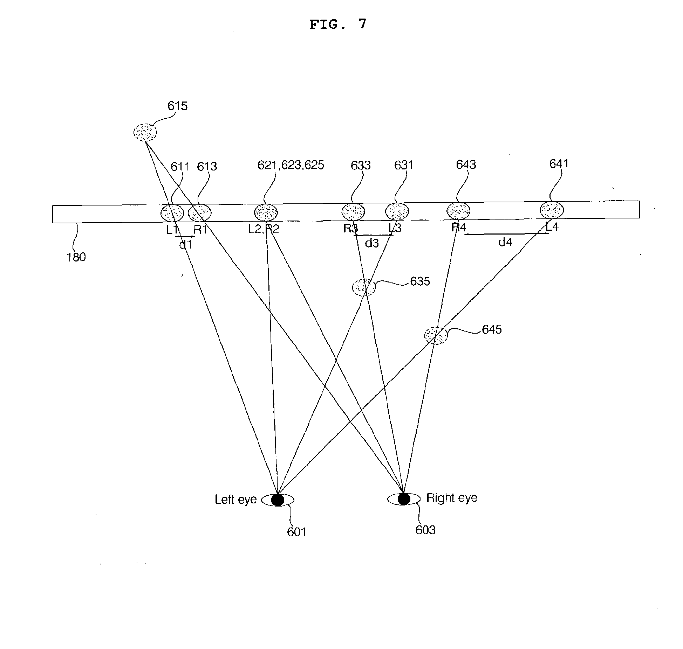

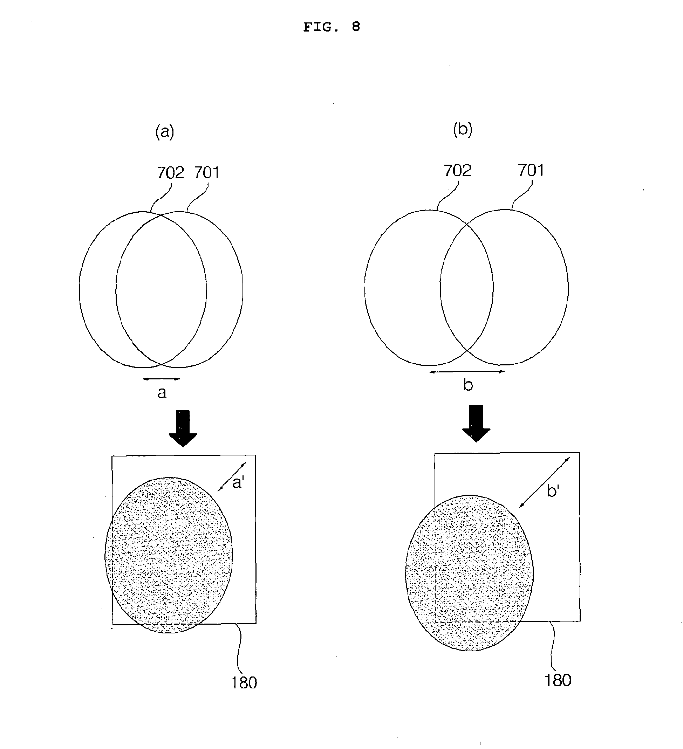

FIG. 7 is a diagram explaining an image formed by a left-eye image and a right-eye image, and FIG. 8 is a diagram explaining the depth of a 3D image according to a disparity between a left-eye image and a right-eye image.

First, referring to FIG. 7, a plurality of images or a plurality of objects 615, 625, 635 or 645 is shown. A first object 615 includes a first left-eye image 611 (L) based on a first left-eye image signal and a first right-eye image 613 (R) based on a first right-eye image signal, and a disparity between the first left-eye image 611 (L) and the first right-eye image 613 (R) is d1 on the display 180. The user sees an image as formed at the intersection between a line connecting a left eye 601 to the first left-eye image 611 and a line connecting a right eye 603 to the first right-eye image 613. Therefore, the user perceives the first object 615 as being located behind the display 180.

Since a second object 625 includes a second left-eye image 621 (L) and a second right-eye image 623 (R), which are displayed on the display 180 to overlap, a disparity between the second left-eye image 621 and the second right-eye image 623 is 0. Thus, the user perceives the second object 625 as being on the display 180.

A third object 635 includes a third left-eye image 631 (L) and a third right-eye image 633 (R) and a fourth object 645 includes a fourth left-eye image 641 (L) and a fourth right-eye image 643 (R). A disparity between the third left-eye image 631 and the third right-eye images 633 is d3 and a disparity between the fourth left-eye image 641 and the fourth right-eye image 643 is d4.

The user perceives the third and fourth objects 635 and 645 at image-formed positions, that is, as being positioned before the display 180.

Because the disparity d4 between the fourth left-eye image 641 (L) and the fourth right-eye image 643 (R) is greater than the disparity d3 between the third left-eye image 631 (L) and the third right-eye image 633 (R), the fourth object 645 appears to be positioned closer to the viewer than the third object 635.

In embodiments of the invention, the distances between the display 180 and the objects 615, 625, 635 and 645 are represented as depths. When an object is perceived as being positioned behind the display 180, the depth of the object is negative-signed. On the other hand, when an object is perceived as being positioned before the display 180, the depth of the object is positive-signed. Therefore, as an object appears closer to the user, the depth of the object is larger.

Referring to FIG. 8, if the disparity a between a left-eye image 701 and a right-eye image 702 in (a) of FIG. 8 is smaller than the disparity b between the left-eye image 701 and the right-eye image 702 in FIG. 8(b), the depth a' of a 3D object created in FIG. 8(a) is smaller than the depth b' of a 3D object created in FIG. 8(b).

In the case where a left-eye image and a right-eye image are combined into a 3D image, the positions of the images perceived by the user may be changed by the disparity between the left-eye image and the right-eye image. This refers to the fact that the depth of a 3D image or 3D object formed with a left-eye image and a right-eye image in combination may be controlled by adjusting the disparity between the left-eye and right-eye images.

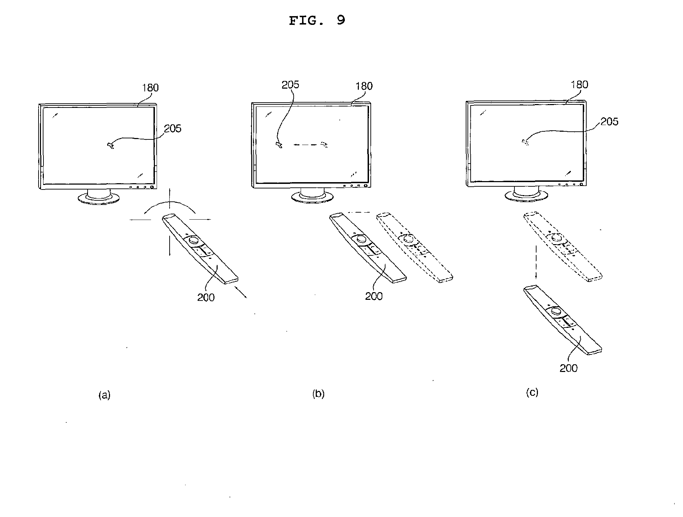

FIG. 9 is a diagram showing a method of controlling a remote controller of FIG. 1.

(a) of FIG. 9 illustrates a pointer 205 representing movement of the remote controller 200, which is displayed on the display 180.

The user may move or rotate the remote controller 200 up and down, side to side ((b) of FIG. 9), and back and forth ((c) of FIG. 9). The pointer 205 displayed on the display 180 of the image display apparatus corresponds to the movement of the remote controller 200. Since the pointer 205 moves in accordance with the movement of the remote controller 200 in a 3D space, the remote controller 200 may be referred to as a pointing device.

Referring to (b) of FIG. 9, if the user moves the remote controller 200 to the left, the pointer 205 moves to the left on the display 180 of the image display apparatus.

Information about the movement of the remote controller 200 sensed by the sensor of the remote controller 200 is transmitted to the image display apparatus. The image display apparatus may calculate the coordinates of the pointer 205 from the information about the movement of the remote controller 200. Then, the image display apparatus may display the pointer 205 at the calculated coordinates.

Referring to (c) of FIG. 9, while pressing a predetermined button of the remote controller 200, the user moves the remote controller 200 away from the display 180. Then, a selection area corresponding to the pointer 205 may be zoomed in on and enlarged on the display 180. On the contrary, if the user moves the remote controller 200 toward the display 180, the selection area corresponding to the pointer 205 is zoomed out and thus contracted on the display 180. Alternatively, when the remote controller 200 moves away from the display 180, the selection area may be zoomed out and when the remote controller 200 approaches the display 180, the selection area may be zoomed in.

With the predetermined button pressed in the remote controller 200, the up, down, left and right movements of the remote controller 200 may be ignored. That is, when the remote controller 200 moves away from or approaches the display 180, only the back and forth movements of the remote controller 200 are sensed, while the up, down, left and right movements of the remote controller 200 are ignored. Unless the predetermined button is pressed in the remote controller 200, the pointer 205 moves in accordance with the up, down, left or right movement of the remote controller 200.

The speed and direction of the pointer 205 may correspond to the speed and direction of the remote controller 200.

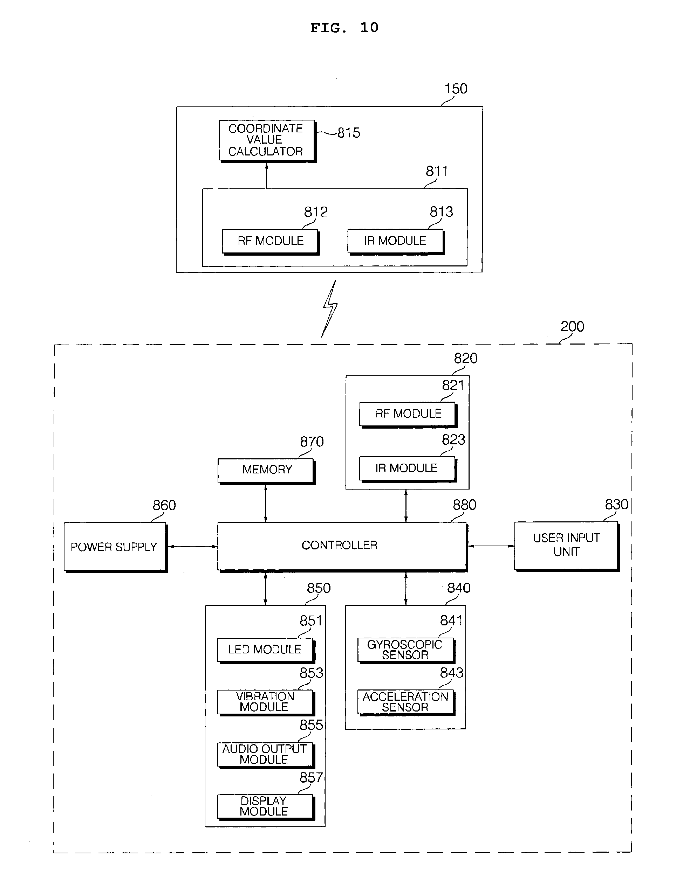

FIG. 10 is a block diagram showing the internal configuration of the remote controller of FIG. 1. Referring to FIG. 10, the remote controller 200 may include a wireless communication module 820, a user input unit 830, a sensor unit 840, an output unit 850, a power supply 860, a memory 870, and a controller 880.

The wireless communication module 820 transmits signals to and/or receives signals from either of the afore-described image display apparatuses according to the embodiments of the invention, herein, the image display apparatus 100.

In the embodiment of the invention, the remote controller 200 may include an RF module 821 for transmitting or receiving signals to or from the image display apparatus 100 according to an RF communication standard. The remote controller 200 may also include an IR module 823 for transmitting or receiving signals to or from the image display apparatus 100 according to an IR communication standard.

In the embodiment, the remote controller 200 transmits information about the movement of the remote controller 200 to the image display apparatus 100 through the RF module 821.

The remote controller 200 may also receive signals from the image display apparatus 100 through the RF module 821. As needed, the remote controller 200 may transmit commands such as a power on/off command, a channel switch command, or a volume change command to the image display apparatus 100 through the IR module 823.

The user input unit 830 may include a keypad, a plurality of buttons, a touchpad and/or a touch screen. The user may enter commands to the image display apparatus 100 by manipulating the user input unit 830. If the user input unit 830 includes hard buttons, the user may input various commands to the image display apparatus 100 by pressing the hard buttons. If the user input unit 830 includes a touch screen displaying soft keys, the user may input various commands to the image display apparatus 100 by touching the soft keys. The user input unit 830 may also include various input tools other than those set forth herein, such as a scroll key and/or a jog wheel, which should not be construed as limiting the invention.

The sensor unit 840 may include a gyroscopic sensor 841 and/or an acceleration sensor 843. The gyroscopic sensor 841 may sense the movement of the remote controller 200, for example, in X-, Y-, and Z-axis directions, and the acceleration sensor 843 may sense the speed of the remote controller 200. The sensor unit 840 may further include a distance sensor for sensing the distance between the remote controller 200 and the display 180.

The output unit 850 may output a video and/or audio signal corresponding to manipulation of the user input unit 830 or corresponding to a signal received from the image display apparatus 100. The user may easily identify whether the user input unit 830 has been manipulated or whether the image display apparatus 100 has been controlled, based on the video and/or audio signal output by the output unit 850.

The output unit 850 may include a Light Emitting Diode (LED) module 851 which is turned on or off whenever the user input unit 830 is manipulated or whenever a signal is received from or transmitted to the image display apparatus 100 through the wireless communication module 820, a vibration module 853 which generates vibrations, an audio output module 855 which outputs audio data, and/or a display module 857 which outputs video data.

The power supply 860 supplies power to the remote controller 200. If the remote controller 200 is kept stationary for a predetermined time or longer, the power supply 860 may, for example, reduce or shut off supply of power to the remote controller 200 in order to save power. The power supply 860 may resume power supply if a predetermined key on the remote controller 200 is manipulated.

The memory 870 may store various types of programs and application data necessary to control or drive the remote controller 200. The remote controller 200 may wirelessly transmit signals to and/or receive signals from the image display apparatus 100 over a predetermined frequency band through the RF module 821. The controller 880 of the remote controller 200 may store information regarding the frequency band used for the remote controller 200 to wirelessly transmit signals to and/or wirelessly receive signals from the paired image display apparatus 100 in the memory 870, for later use.

The controller 880 provides overall control to the remote controller 200. The controller 880 may transmit a signal corresponding to a key manipulation detected from the user input unit 830 or a signal corresponding to motion of the remote controller 200, as sensed by the sensor unit 840, to the image display apparatus 100 through the wireless communication unit 820.

FIG. 11 is a flowchart illustrating a method for operating an image display apparatus according to an embodiment of the invention, and FIGS. 12 to 23 are views referred to for describing various examples of the method for operating the image display apparatus, illustrated in FIG. 11.

Referring to FIG. 11, first, the image display apparatus enters (activates or enables) a multi-image display mode (S1110).

The image display apparatus may manually enter the multi-image display mode by user input. For example, if the remote controller 100 or a local key includes a hot key for displaying multiple images, the image display apparatus may enter the multi-image display mode by manipulating the hot key. Alternatively, the image display apparatus may enter the multi-image display mode by selecting a multi-image display mode object in a state in which a menu is displayed on the display 180.

The multi-image display mode enables a plurality of users to view different images. For example, a first viewer who wears a first viewing device 195a can view only a first image from among a plurality of images and a viewer who wears a second viewing device 195b can view only a second image from among the plurality of images. As another example, in a glassless method, a user can view only an image corresponding to a location or a position of the user.

The image display apparatus may automatically enter the multi-image display mode. For example, if a plurality of users wear a plurality of viewing devices, the image display apparatus 100 may detect that the plurality of users wear the plurality of viewing devices and automatically enter the multi-image display mode. The plurality of viewing devices may be detected using the above-described camera unit.

(a) of FIG. 12 shows an object, indicating whether the image display apparatus enters the multi-image display mode, displayed on the display 180. Such an object 1210 may be displayed when the hot key is manipulated or the multi-image display mode object is selected, as described above.

(b) of FIG. 12 shows an object 1220 for suggesting that a user wear a viewing device, which is displayed on the display 180. For example, the object 1220 may be displayed if it is determined that the image display apparatus enters the multi-image display mode in (a) of FIG. 12. Alternatively, if a hot key is manipulated or a multi-image display mode object of a menu is selected, the object 1220 may be displayed.

Next, a first image and a second image are displayed on the display according to the multi-image display mode (S1115). The controller 170 controls display of the first image and the second image on the display 180 according to the multi-image display mode.

The first image or the second image may be any one of a received broadcast image, an externally input image, an image or broadcast program guide image stored in the image display apparatus 100, or a home screen image.

For example, if the first image and the second image are broadcast images, the first image and the second image are preferably broadcast images of different channels. Thus, users can view different images.

In order to receive broadcast images of different channels, the tuner unit 110 of the broadcast reception unit 105 may include a plurality of tuners. Alternatively, a first broadcast channel may be received through the tuner unit 110 and a second broadcast channel may be received through the network interface 135.

As another example, the first image may be a broadcast image and the second image may be an externally input image. Thus, users can view different images received from different sources or via different routes.

The controller 170 may arrange the received first and second images in a predetermined format and simultaneously display the arranged first and second images.

The formatter 360 of the controller 170 may arrange the received first and second images in any one of the side-by-side format ((a) of FIG. 4, the top/down format ((b) of FIG. 4, the interlaced format ((d) of FIG. 4 and the checker box format ((e) of FIG. 4), as shown in FIG. 4.

Then, the display 180 spatially divides and simultaneously displays the first image and the second image. Thus, a plurality of users can divisionally view the first image and the second image in a state of wearing different passive type viewing devices 195.

FIG. 13 shows image signal processing for viewing multiple images using polarized glasses. The formatter 360 of the controller 170 receives the first image 1310 and the second image 1320 and generates an image 1330 in which the first image 1310 and the second image 1320 are mixed in the interlaced format ((d) of FIG. 4) among the formats shown in FIG. 4.

The display 180 simultaneously displays the image 1330. At this time, a film including a left-eye polarized pattern and a right-eye polarized pattern corresponding to the interlaced format may be disposed on the display 180.

A first user who wears a first viewing device 195a composed of the left-eye polarized glass views only the first image 1340 of the displayed image 1330. A second user who wears a second viewing device 195b composed of the right-eye polarized glasses views only the second image 1350 of the displayed image 1330. Thus, the users can view different images.

The controller 170 and, more particularly, the formatter 360 of the controller 170 may arrange the received first and second images in the frame sequential format and sequentially display the arranged first and second images.

The display 180 may sequentially display the first and second images. Then, a plurality of users can divisionally view the first and second image in a state of wearing different active type viewing apparatuses 195.

FIG. 14 shows image signal processing for viewing multiple images using shutter glasses. The formatter 360 of the controller 170 receives the first image 1310 and the second image 1320 and generates images 1335 in which the first image and the second image are mixed in the frame sequential format ((c) of FIG. 4) among the formats shown in FIG. 4. That is, a vertical synchronization frequency doubles.

The display 180 sequentially and/or alternatingly displays the images 1335. A first user who wears the shutter glasses 195a in which both a left-eye glass and a right-eye glass are opened during a first time (a first period or point of time) (t=t1) views only the first image 1340 from among the displayed images 1335. A second user who wears the shutter glasses 195b in which both a left-eye glass and a right-eye glass are opened during a second time (a second period or point of time) (t=t2) views only the second image 1350 from among the displayed images 1335.

Hereinafter, for convenience of description, the case in which the first image and the second image are simultaneously displayed using the passive method of FIG. 13 will be focused upon.

Next, a determination as to whether a first input is received is made (S1120). If it is determined that the first input is received, a first object corresponding to a first input is displayed to overlap any one of the first image and the second image (S1125).

The controller 170 determines whether the first input is received from the remote controller 200 or a local key. If it is determined that the first input is received, a first object corresponding to the first input is displayed to overlap any one of the displayed first and second images.

For example, if an OK key input is received from the remote controller 200, an object including at least one of a volume control item, a channel control item or an external input item may be displayed to overlap the second image. At this time, no object may be displayed in the first image. That is, the object may be displayed only in the second image.

The OSD generator 340 of the controller 170 generates the object. The mixer 345 of the controller 170 performs mixing such that the generated object overlaps with the second image. Thereafter, the formatter 360 mixes the first image and the second image in a predetermined format.

FIGS. 15A to 15C show predetermined objects displayed according to manipulation of an OK key of the pointing device. FIG. 15A shows a first image 1510 of a predetermined broadcast channel DTV 7-1 and a second image 1520 of a predetermined broadcast channel DTV 9-1, both of which are simultaneously displayed on the display 180. For convenience of description, the first image 1510 and the second image 1520 are arranged in a top-and-bottom format.

For example, if a first viewing device 195a includes left-eye (L) polarized glasses and a second viewing device 195b includes right-eye (R) polarized glasses, a first user who wears the first viewing device 195a recognizes only the first image 1510 and a second user who wears the second viewing device 195b recognizes only the second image 1520.

If the second user who wears the second viewing device 195b uses a pointing device 200a, a pointer corresponding to the movement of the pointing device 200a may be displayed only in the second image 1520. That is, only one user may recognize the movement of the pointing device 200a. The pointer is displayed according to users such that the users may perform desired operations without confusion.

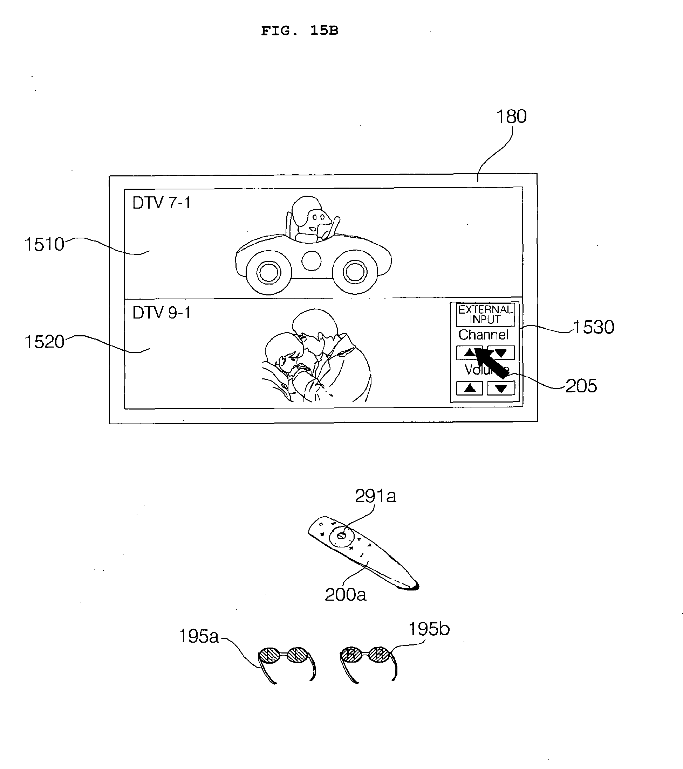

If the second user who wears the second viewing device 195b presses the OK key 291 a of the pointing device 200a, as shown in FIG. 15B, an object 1530 including at least one of a volume control item, a channel control item or an external input item may be displayed to overlap the second image 1520. A pointer 205 may also be displayed separately or additionally.

At this time, the first user who wears the first viewing device 195a does not recognize the presence of the object 1530 or the pointer 205, because no object is displayed in the first image 1510 that is viewable by the first user.

Next, a determination as to whether a predetermined item of a first object is selected is made (S1130). If it is determined that the predetermined item is selected, an operation corresponding to the selected item is performed (S1135).

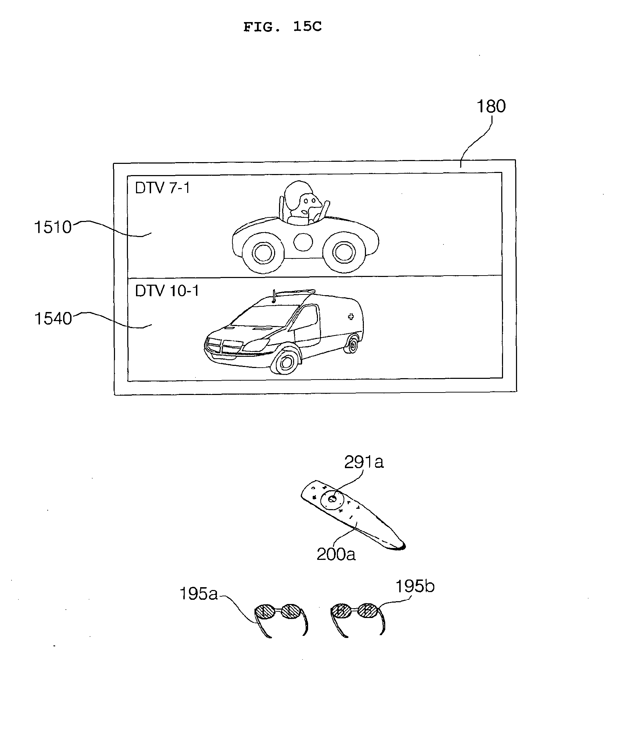

If the second user who wears the second viewing device 195b selects a channel up item using the pointer 205 corresponding to the movement of the pointing device 200a in a state in which the object 1530 including at least one of the volume control item as shown in FIG. 15B, the channel control item or the external input item is displayed, and then as shown in FIG. 15C, the broadcast channel of the second image 1520 is changed from DTV 9-1 to DTV 10-1 and thus the broadcast image 1540 of the changed channel DTV 10-1 is displayed.

Meanwhile, referring back to FIG. 15B, if the second user who wears the second viewing device 195b selects a volume up item using the pointer 205 corresponding to the movement of the pointing device 200a, the volume of the second image 1520 may be increased. At this time, for different audio outputs of multi-image display, the viewing devices 195a and 195b may include respective audio output units.

FIGS. 16A to 16C show the case in which the external input item 1610 is selected from among the volume control item, the channel control item and the external input item using the pointer 205 corresponding to the movement of the pointing device 200a in a state in which the object 1530 is displayed, in a manner similar to FIGS. 15A to 15C.

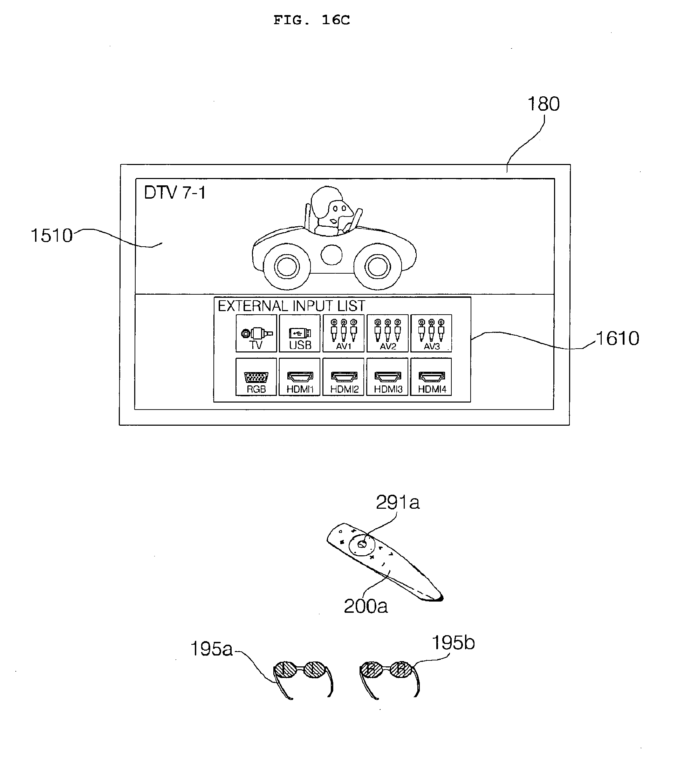

As shown in FIG. 16C, an object 1610 representing an external input list is displayed. This object 1610 may be displayed to overlap the second image 1520.

Only the second user who wears the second viewing device 195b can view the object 1610, and the first user who wears the first viewing device 195a cannot view the object 1610.

After operation S1115, a determination as to whether a second input is received is made (S1140). If it is determined that the second input is received, an operation corresponding to the second input may be performed without displaying an object with respect to the other of the first and second images (S1145).

The controller 170 may immediately perform the operation corresponding to the second input with respect to the other of the first image and the second image, if the second input different from the first input is received. Unlike the reception of the first input, no object may be displayed.

For example, if the second input for manipulating the channel control key of the pointing device is received, the channel of the first broadcast image may be immediately controlled. Steps S1140 and S1145 may be performed after operation S1135.

FIG. 17 shows channel change performed by manipulating the channel control key of the pointing device. Referring to FIG. 17, (a) of FIG. 17 shows the case in which the first image 1510 of the predetermined broadcast channel DTV 7-1 and the second image 1520 of the predetermined broadcast channel DTV 9-1 are simultaneously displayed on the display 180, similarly to FIG. 15A.

If the user who wears the first viewing device 195a presses the channel control key 296a of the pointing device 200a and, more particularly, a channel up key, the broadcast channel may be immediately changed from DTV 7-1 to DTV 8-1 without displaying an object, as shown in (b) of FIG. 17. That is, a third image 1710 of a broadcast channel DTV 8-1 may be displayed instead of the first image 1510.

That is, while channel control of the first image 1510 is performed using the channel control key of the pointing device as shown in FIG. 17, channel control of the second image 1520 is performed using the OK key and the channel control object as shown in FIGS. 15A to 15C. The first and second users who respectively wear the viewing devices 195a and 195b may perform channel control without confusion.

The same is true with regard to volume control. That is, a volume key 294a of the pointing device may be used to control the volume of the first image similarly to FIG. 17 and an OK key and a volume control object may be used to control the volume of the second image similarly to FIGS. 15A to 15C. The first and second users who respectively wear the viewing devices 195a and 195b may perform volume control without confusion.

FIG. 18 shows channel change performed by manipulating a channel control key of a general remote controller.

FIG. 18 differs from FIG. 17 in that the channel of the first image 1510 is changed from DTV 7-1 to DTV 8-1 using a channel control key 296b of the general remote controller 200b instead of the channel control key 296a of the pointing device 200a by way of not displaying an object (i.e., the OSD object).

As compared to FIGS. 15A to 15C, since different remote controllers are used, channel control of the first image 1510 and channel control of the second image 1520 are distinguished from each other.

If the volume control key 294b of the general remote controller 200b is used, volume control of the first image 1510 may be immediately performed without displaying the object.

As compared to FIGS. 15A to 15C, since different remote controllers are used, channel control of the first image and channel control of the second image are distinguished from each other.

FIG. 19 shows channel control performed using a picture-in-picture (PIP) channel key of a general remote controller.

(a) of FIG. 19 shows the case in which the first image 1510 of the predetermined broadcast channel DTV 7-1 and the second image 1520 of the predetermined broadcast channel DTV 9-1 are simultaneously displayed on the display 180.

At this time, the second user who wears the second viewing device 195b may perform channel control using a PIP channel key 297b of the general remote controller 200b.

That is, if the PIP channel key 297b of the general remote controller 200b is manipulated instead of the channel key 296b of the general remote controller 200b, channel control of the second image may be performed instead of channel control of the first image.

(b) of FIG. 19 shows the case in which the broadcast channel of the second image is immediately changed from DTV 9-1 to DTV 10-1 without displaying an object if the PIP channel key 297b of the general remote controller 200b and, more particularly, an up key are manipulated. Then, the broadcast image 1530 of the changed channel is displayed.

FIG. 20 shows channel control performed using four direction keys of a pointing device. (a) of FIG. 20 shows the case in which the first image 1510 of the predetermined broadcast channel DTV 7-1 and the second image 1520 of the predetermined broadcast channel DTV 9-1 are simultaneously displayed on the display 180 similarly to FIG. 15A.

At this time, the second user who wears the second viewing device 195b may perform channel control using the four direction keys 293a of the pointing device 200a and, more particularly, up and down keys.

(b) of FIG. 20 shows the case in which the broadcast channel of the second image is immediately changed from DTV 9-1 to DTV 10-1 without displaying an object if the four direction keys 293a of the pointing device 200a and, more particularly, an up key are manipulated. Then, the broadcast image 1540 of the changed channel is displayed instead of the second image.

Channel change of the first image may be performed using the channel control key 296a of the pointing device 200a as described with reference to FIG. 17.

Even when the same pointing device 200a is used, if a key for controlling the channel of the first image and a key for controlling the channel of the second image are differently set, it is possible to perform channel control of the first image and channel control of the second image without confusion.

The second user who wears the second viewing device 195b may perform volume control using the four direction keys 293a of the pointing device 200a and, more particularly, left and right keys.

Volume control of the first image may be performed using the volume key 294a of the pointing device 200a as described with reference to FIG. 17.

Even when the same pointing device is used, if a key for controlling the volume of the first image and a key for controlling the volume of the second image are differently set, it is possible to perform volume control of the first image and volume control of the second image without confusion.

FIG. 21 shows channel control performed using four direction keys of a general remote controller. FIG. 21 is similar to FIG. 20 in that channel control of the second image is performed using the four direction keys 293b of the general remote controller 200b and, more particularly, up and down keys without displaying an object (i.e., and OSD object). Unlike FIG. 20, the four direction keys 293b of the general remote controller 200b are used instead of the four direction keys 293a of the pointing device 200a.

FIG. 21 shows the case in which the broadcast channel of the second image 1520 is immediately changed from DTV 9-1 to DTV 10-1 without displaying an object if the four direction keys 293b of the general remote controller 200b and, more particularly, an up key are manipulated, similarly to that of FIG. 20(b). (a) of FIG. 21 shows the case before the broadcast channel is changed. Then, the broadcast image 1540 of the changed channel is displayed instead of the second image 1520.

Channel change of the first image 1510 may be performed using the channel control key 296b of the general remote controller 200b as described with reference to FIG. 18.

Even when the same pointing device 200b is used, if a key for controlling the channel of the first image and a key for controlling the channel of the second image are differently set, it is possible to perform channel control of the first image and channel control of the second image without confusion. The second user who wears the second viewing device 195b may perform volume control of the second image using the four direction keys 293b of the general remote controller 200b and, more particularly, left and right keys.

Volume control of the first image may be performed using the volume key 294b of the general remote controller 200b as described with reference to FIG. 18.

Even when the same remote controller 200b is used, if a key for controlling the volume of the first image and a key for controlling the volume of the second image are differently set, it is possible to perform volume control of the first image and volume control of the second image without confusion.

Although FIGS. 15A to 21 show broadcast images of different channels displayed in the multi-image display mode, the broadcast image of the same channel may be displayed when the channels of the images are controlled.

In this case, an object indicating that the same channel is viewed in the first and second image may be displayed. The users who wear the viewing devices 195a and 195b may identify that the same broadcast channel is viewed. Such an object is applicable to the case in which the same external input image, the same stored image, the same EPG image, etc., is viewed after different images are viewed.

Next, FIG. 22A shows the case in which a home screen image 2200 is displayed as a first image and a broadcast image 1520 is displayed as a second image on the display 180.

If a first user who wears a first viewing device 195a presses a home key 211a of a pointing device 200a in a state in which the first image 1510 of the predetermined broadcast channel DTV 7-1 and the second image 1520 of the predetermined broadcast channel DTV 9-1 are simultaneously displayed on the display 180 as shown FIG. 15A, the home screen 2200 may be displayed instead of the first image 1510 as shown in FIG. 22A. At this time, the second image 1520 may continue to be displayed.

The home screen 2200 may be roughly separated into a broadcast image region 2210 for displaying a broadcast image, a card object region 2220 including card objects 2221 and 2222 for displaying items from various sources (e.g., content providers (CPs) or applications) by lists and an application menu region 2230 including a shortcut menu of an application item. The application menu region 2230 is displayed on the lower side of the screen. In addition, a login item and an exit item are further displayed.

At this time, items or objects are fixedly displayed in the broadcast image region 2210 and the application menu region 2230.

The card objects 2221 and 2222 may be movably or exchangeably displayed in the card object region 2220. Alternatively, items (e.g., "yakoo" item) of the card objects 2221 and 2222 may be movably or exchangeably displayed.

When the first user who wears the first viewing device 195a manipulates the home key included in the remote controller, the home screen 2200 may be displayed. Then, only the first user who wears the first viewing device 195a recognizes the home screen 2200.

FIG. 22B shows the case in which an EPG screen 2300 is displayed as a first image and a broadcast image 1520 is displayed as a second image on the display 180. If the first user who wears the first viewing device 195a presses a broadcast information key or EPG key 211b of the general remote controller 200b in a state in which the first image 1510 of the predetermined broadcast channel DTV 7-1 and the second image 1520 of the predetermined broadcast channel DTV 9-1 are simultaneously displayed on the display 180 as shown in FIG. 15A, the EPG screen 2300 may be displayed instead of the first image 1510 as shown in (a) of FIG. 23. At this time, the second image may continue to be displayed.

Thus, only the first user who wears the first viewing device 195a recognizes the EPG screen 2300.

A remote controller including a home key and a remote controller including a broadcast information key or an EPG key may be the same. Although the pointing device 200a includes a home key in FIG. 22A and the general remote controller 200b includes an EPG key in FIG. 22B, embodiments of the invention are not limited thereto and both a home key and an EPG key may be included in one remote controller.

For example, if the home key is manipulated in the pointing device 200a including both the home key and the EPG key, the home screen 2200 is displayed as shown in FIG. 22A and, if the EPG key is manipulated, the EPG screen 2300 may be displayed as shown in (a) of FIG. 23.

As another example, if the home key is manipulated in the general remote controller 200b including both the home key and the EPG key, the home screen 2200 is displayed as shown in FIG. 22A and, if the EPG key is manipulated, the EPG screen 2300 may be displayed as shown in (b) of FIG. 23.

FIG. 23 shows different objects respectively displayed in first and second images using an OK key of a pointing device and an OK key of a general remote controller.

(a) of FIG. 23 shows the case in which the first image 1510 of the predetermined broadcast channel DTV 7-1 and the second image 1520 of the predetermined broadcast channel DTV 9-1 are simultaneously displayed on the display 180 similarly to FIG. 15A.

At this time, if the second user who wears the second viewing device 195b presses the OK key 291a of the pointing device 200a, an object 1530 including at least one of a volume control item, a channel control item or an external input item may be displayed to overlap the second image 1520 as shown in (b) of FIG. 23. A pointer 205 may also be displayed.

If the first user who wears the first viewing device 195a presses the OK key 291b of the general remote controller 200b, an object 1910 indicating broadcast information such as channel information, a program title or a current time may be displayed to overlap the first image 1510 as shown in (b) of FIG. 23. The object 1910 may be displayed above the first image 1510.

For display of the object 1910, the OSD generator 340 of the controller 170 may generate the object 1910 separately from the object displayed in the second image. Then, the mixer 345 mixes the first image 1510 and the generated object 1910 to overlap each other.

The object of the first image and the object of the second image may be generated by different OSD generators. Thus, a plurality of OSD generators may be included. In addition, a plurality of mixers may be included.

For display of the object in the first image and display of the object in the second image, the objects are processed in parallel using different paths, thereby increasing signal processing speed.

An object 1920 indicating a home menu item, a channel (CH) browser item and a recording (DVR) item may be further displayed below the first image 1510.

Items displayed below the first image 1510 may be selected while moving a cursor using the four direction keys of the general remote controller 200b.

If the same key (OK key) of different remote controllers is manipulated, they are identified as different inputs and thus different objects are displayed in the first and second images. Thus, it is possible to display a desired menu in a viewed image without confusion.

Unlike FIG. 23, different objects may be displayed in the first and second images by manipulating the OK key of the pointing device.

For example, as shown in (a) of FIG. 23, if the second user who wears the second viewing device 195b presses the OK key 291a of the pointing device 200a in a state in which the first image 1510 of the predetermined broadcast channel DTV 7-1 and the second image 1520 of the predetermined broadcast channel DTV 9-1 are simultaneously displayed on the display 180 as shown in (a) of FIG. 23, an object 1530 including at least one of a volume control item, a channel control item or an external input item may be displayed to overlap the second image 1520 as shown in (b) of FIG. 23 and, at the same time, an object 1910 indicating broadcast information such as channel information, a program title or current time may be displayed to overlap the first image 1510.

That is, unlike (a) of FIG. 23, even when the first user who wears the first viewing device 195a does not press the OK key 291b of the general remote controller 200b, the object 1910 indicating broadcast information such as channel information, the program title or the current time may be displayed to overlap the first image 1510, as shown in (b) of FIG. 23.

The first user who wears the first viewing device 195a may confirm the object 1910 displayed to overlap the first image 1510 and the second user who wears the second viewing device 195b may confirm the object 1530 displayed to overlap the second image 1520, by manipulating one OK key 291a.

Unlike the embodiment of Fig. 23, different objects 1910 and 1530 may be respectively displayed in the first image 1510 and the second image 1520, by only manipulating the OK key 291b of the general remote controller 200b in other embodiments.

The image display apparatus and the method for operating the same according to the foregoing embodiments are not restricted to the embodiments set forth herein. Therefore, variations and combinations of the example embodiments set forth herein may fall within the scope of the invention.

The method for operating an image display apparatus according to the foregoing embodiments may be implemented as codes that can be written to a computer-readable recording medium and can thus be read by a processor. The computer-readable recording medium may be any type of recording device in which data can be stored in a computer-readable manner. Examples of the computer-readable recording medium include a ROM, a RAM, a CD-ROM, a magnetic tape, a floppy disc, and an optical data storage. The computer-readable recording medium can be distributed over a plurality of computer systems connected to a network so that computer-readable code is written thereto and executed therefrom in a decentralized manner. Functional programs, code, and code segments needed for realizing the embodiments herein can be construed by one of ordinary skill in the art.

Although the example embodiments of the invention have been disclosed for illustrative purposes, those skilled in the art will appreciate that various modifications, additions and substitutions are possible, without departing from the scope of the invention as disclosed in the accompanying claims.

## Claims

1. A method for operating an image display apparatus, comprising:
entering (S1110) a multi-input display mode of the image display apparatus;
displaying (S1115) first and second images (1510,1520) respectively viewable by first and second users on a display of the image display apparatus according to the multi-input display mode;
displaying a pointer based on a pointing.signal received from a pointing device (200a), wherein the pointer is displayed only on the second image of the first and second images (1510,1520);
displaying (S1125) a first object (1530) including at least one of a volume control item, a channel control item or an external input item according to manipulation of a first key (291) of the pointing device (200a), wherein the first object (1530) is displayed on the second image;
changing broadcast channel of the second image (1520) and displaying broadcast image (1540) of the changed channel, when a channel control item is selected by the pointer (205) based on the pointing signal received from the pointing device (200a); and
changing broadcast channel of the first image (1510) and displaying a third image (1710) of the changed channel according to manipulation of a channel control key (296a) of the pointing device (200a).

2. The method according to claim 1, wherein the first user who wears a first viewing device (195a) is able to view only the first image and the second user who wears a second viewing device (195b) is able to view only the second image.

3. The method according to claim 1, further comprising, if the volume control item of the first object (1530) is selected, performing control of volume of the second image (1520).

4. The method according to claim 1, wherein when the channel control key or a volume control key of the pointing device (200a) is pressed, changing broadcast channel or volume on the first image without displaying the first object (1530) on the first image.

5. The method according to claim 1, further comprising, when a predetermined key of a remote controller (200b) different from the pointing device (200a) is pressed, displaying a second object (1910) indicating broadcast information including at least one of channel information, a program title or a current time on the first image.

6. The method according to claim 5, wherein:
the first object (1530) is displayed if an Ok key of the pointing device (200a) is pressed, and
the second object (1910) is displayed if an Ok key of the remote controller (200b) is pressed.

7. An image display apparatus comprising:
a pointing device (200a) configured to output a pointing signal;
a display (180); and
a controller (170) configured to control the display to display first and second images (1510,1520) respectively viewable by first and second users on the display in a multi-image display mode,
display a pointer based on a pointing signal received from a pointing device (200a), wherein the pointer is displayed on the second image of the first and second images (1510,1520),
display (S1125) a first object (1530) including at least one of a volume control item, a channel control item or an external input item according to manipulation of a first key (291) of the pointing device (200a), wherein the first object (1530) is displayed only on the second image,
change broadcast channel of the second image (1520) and display broadcast image (1540) of the changed channel, when a channel control item is selected by the pointer (205) based on the pointing signal received from the pointing device (200a),
change broadcast channel of the first image (1510) and display a third image (1710) of the changed channel according to manipulation of a channel control key (296a) of the pointing device (200a).

8. The image display apparatus according to claim 7, wherein if the volume control item of the first object (1530) is selected, the controller (170) performs (S1135) control of the volume of the second image (1520).

9. The image display apparatus according to claim 7, wherein, when the channel control key or a volume control key of the of the pointing device (200a) is pressed,, the controller (170) changes broadcast channel or volume on the first image (1510) without displaying the first object (1530) on the first image.

10. The image display apparatus according to claim 7, wherein:
when a predetermined key of a remote controller 200b different from the pointing device (200a) is pressed, the controller (170) controls the display to display a second object (1910) indicating broadcast information including at least one of channel information, a program title or a current time on the first image.

11. The image display apparatus according to claim 10, wherein:
the controller (170) controls the display to display the first object (1530) if an Ok key of the pointing device (200a) is pressed, and the controller (170) controls the display to display the second object (1910) if an Ok key of the remote controller (200b) is pressed.

12. The image display apparatus according to claim 7, further comprising:
a first viewing device (195a) configured to allow the first user to view only the first image (1510); and
a second viewing device (195b) configured to allow the second user to view only the second image (1520).
wherein the first viewing device (195a) includes a left-eye glass and a right-eye glass polarized in the same direction.

## Patentansprüche

1. Verfahren zum Betrieb einer Bildanzeigevonichtung, aufweisend:
Eingeben (S1110) eines Multi-Input-Anzeigemodus der Bildanzeigevorrichtung;
Anzeigen (S1115) eines ersten und zweiten Bildes (1510, 1520), die jeweils von einem ersten und zweiten Benutzer betrachtet werden können, auf einer Anzeige der Bildanzeigevorrichtung gemäß dem Multi-Input-Anzeigemodus;
Anzeigen eines Zeigers auf der Grundlage eines von einer Zeigevorrichtung (200a) empfangenen Zeigesignals, wobei der Zeiger nur auf dem zweiten Bild des ersten und zweiten Bildes (1510, 1520) angezeigt wird;
Anzeigen (S1125) eines ersten Objekts (1530), das zumindest eines von einem Lautstärkeregelelement, einem Kanalsteuerelement oder einem externen Eingabeelement aufweist, gemäß einer Betätigung einer ersten Taste (291) der Zeigevorrichtung (200a), wobei das erste Objekt (1530) auf dem zweiten Bild angezeigt wird;
Ändern eines Sendekanals des zweiten Bildes (1520) und Anzeigen eines Sendebildes (1540) des geänderten Kanals, wenn ein Kanalsteuerelement vom Zeiger (205) auf der Grundlage des von der Zeigevorrichtung (200a) empfangenen Zeigesignals ausgewählt wird; und
Ändern des Sendekanals des ersten Bildes (1510) und Anzeigen eines dritten Bildes (1710) des geänderten Kanals gemäß der Betätigung einer Kanalsteuertaste (296a) der Zeigevorrichtung (200a).

2. Verfahren nach Anspruch 1, wobei der erste Benutzer, der eine erste Betrachtungsvorrichtung (195a) trägt, fähig ist, nur das erste Bild zu betrachten und der zweite Benutzer, der eine zweite Betrachtungsvorrichtung (195b) trägt, fähig ist, nur das zweite Bild zu betrachten.

3. Verfahren nach Anspruch 1, ferner aufweisend, wenn das Lautstärkeregelelement des ersten Objekts (1530) ausgewählt wird, Ausführen der Regelung der Lautstärke des zweiten Bildes (1520).

4. Verfahren nach Anspruch 1, wobei, wenn die Kanalsteuertaste oder eine Lautstärkeregeltaste der Zeigevorrichtung (200a) gedrückt wird, der Sendekanal oder die Lautstärke auf dem ersten Bild ohne Anzeigen des ersten Objekts (1530) auf dem ersten Bild geändert wird.

5. Verfahren nach Anspruch 1, ferner aufweisend, wenn eine vorbestimmte Taste einer von der Zeigevorrichtung (200a) verschiedenen Fernbedienung (200b) gedrückt wird, Anzeigen eines zweiten Objekts (1910), das eine Rundfunkinformation angibt, die zumindest eines von einer Kanalinformation, einem Programmtitel oder einer aktuellen Zeit aufweist, auf dem ersten Bild.

6. Verfahren nach Anspruch 5, wobei:
das erste Objekt (1530) angezeigt wird, wenn eine Ok-Taste der Zeigevorrichtung (200a) gedrückt wird, und
das zweite Objekt (1910) angezeigt wird, wenn eine Ok-Taste der Fernbedienung (200b) gedrückt wird.

7. Bildanzeigevorrichtung, aufweisend:
eine Zeigevorrichtung (200a), die konfiguriert ist, um ein Zeigesignal auszugeben;
eine Anzeige (180); und
eine Steuerung (170), die konfiguriert ist, um die Anzeige zu steuern, um ein erstes und zweites Bild (1510, 1520), die jeweils von einem ersten und zweiten Benutzer betrachtet werden können, auf der Anzeige in einem Mehrbildanzeigemodus anzuzeigen,
einen Zeiger auf der Grundlage eines von einer Zeigevorrichtung (200a) empfangenen Zeigesignals anzuzeigen, wobei der Zeiger auf dem zweiten Bild des ersten und zweiten Bildes (1510, 1520) angezeigt wird,
ein erstes Objekt (1530), das zumindest eines von einem Lautstärkeregelelement, einem Kanalsteuerelement oder einem externen Eingabeelement aufweist, gemäß einer Betätigung einer ersten Taste (291) der Zeigevorrichtung (200a) anzuzeigen (S1125), wobei das erste Objekt (1530) nur auf dem zweiten Bild angezeigt wird,
einen Sendekanal des zweiten Bildes (1520) zu ändern und ein Sendebild (1540) des geänderten Kanals anzuzeigen, wenn das Kanalsteuerelement vom Zeiger (205) auf der Grundlage des von der Zeigevorrichtung (200a) empfangenen Zeigesignals ausgewählt wird,
gemäß einer Betätigung einer Kanalsteuertaste (296a) der Zeigevorrichtung (200a) einen Sendekanal des ersten Bildes (1510) zu ändern und ein drittes Bild (1710) des geänderten Kanals anzuzeigen.

8. Bildanzeigevorrichtung nach Anspruch 7, wobei, wenn das Lautstärkeregelelement des ersten Objekts (1530) ausgewählt wird, die Steuerung (170) die Regelung der Lautstärke des zweiten Bildes (1520) ausführt (S 1135).

9. Bildanzeigevorrichtung nach Anspruch 7, wobei, wenn die Kanalsteuertaste oder eine Lautstärkeregeltaste der Zeigevorrichtung (200a) gedrückt wird, die Steuerung (170) den Sendekanal oder die Lautstärke auf dem ersten Bild (1510) ohne Anzeigen des ersten Objekts (1530) auf dem ersten Bild ändert.

10. Bildanzeigevorrichtung nach Anspruch 7, wobei:
wenn eine vorbestimmte Taste einer von der Zeigevorrichtung (200a) verschiedenen Fernbedienung 200b gedrückt wird, die Steuerung (170) die Anzeige steuert, um ein zweites Objekt (1910), das eine Rundfunkinformation angibt, die zumindest eines von einer Kanalinformation, einem Programmtitel oder einer aktuellen Zeit aufweist, auf dem ersten Bild anzuzeigen.

11. Bildanzeigevorrichtung nach Anspruch 10, wobei:
die Steuerung (170) die Anzeige steuert, um das erste Objekt (1530) anzuzeigen, wenn eine Ok-Taste der Zeigevorrichtung (200a) gedrückt wird, und die Steuerung (170) die Anzeige steuert, um das zweite Objekt (1910) anzuzeigen, wenn eine Ok-Taste der Fernbedienung (200b) gedrückt wird.

12. Bildanzeigevorrichtung nach Anspruch 7, ferner aufweisend:
eine erste Betrachtungsvorrichtung (195a), die konfiguriert ist, um dem ersten Benutzer zu ermöglichen, nur das erste Bild (1510) zu betrachten; und
eine zweite Betrachtungsvorrichtung (195), die konfiguriert ist, um dem zweiten Benutzer zu ermöglichen, nur das zweite Bild (1520) zu betrachten, wobei die erste Betrachtungsvorrichtung (195a) ein Brillenglas für das linke Auge und ein Brillenglas für das rechte Auge, die in dieselbe Richtung polarisiert sind, aufweist.

## Revendications

1. Procédé de fonctionnement d'un appareil d'affichage d'image comprenant :
un passage (S1110) à un mode d'affichage multi-entrée de l'appareil d'affichage d'image ;
un affichage (S1115) des première et deuxième images (1510, 1520), respectivement visualisables par un premier et un second utilisateurs, sur un affichage de l'appareil d'affichage d'image selon le mode d'affichage multi-entrée ;
un affichage d'un pointeur basé sur un signal de pointage reçu à partir d'un dispositif de pointage (200a), dans lequel le pointeur est affiché uniquement sur la deuxième image des première et deuxième images (1510, 1520) ;
un affichage (S1125) d'un premier objet (1530) incluant au moins un élément de contrôle de volume, un élément de contrôle de canal ou un élément d'entrée externe,
en fonction d'une manipulation d'une première touche (291) du dispositif de pointage (200a), dans lequel le premier objet (1530) est affiché sur la deuxième image ;
un changement de canal d'émission de la deuxième image (1520) et un affichage d'image d'émission (1540) du canal modifié lorsqu'un élément de contrôle de canal est choisi par le pointeur (291) basé sur le signal de pointage reçu à partir du dispositif de pointage (200a) ; et
un changement de canal d'émission de la première image (1510) et un affichage d'une troisième image (1710) du canal modifié en fonction d'une manipulation d'une touche de contrôle de canal (296a) du dispositif de pointage (200a).

2. Procédé selon la revendication 1, dans lequel le premier utilisateur qui porte un premier dispositif de visualisation (195a) est capable de visualiser uniquement la première image et le second utilisateur qui porte un second dispositif de visualisation (195b) est capable de visualiser uniquement la deuxième image.

3. Procédé selon la revendication 1, comprenant en outre, lorsque l'élément de contrôle de volume du premier objet (1530) est choisi, une réalisation d'un contrôle de volume de la deuxième image (1520).

4. Procédé selon la revendication 1, dans lequel la touche de contrôle de canal ou une touche de contrôle de volume du dispositif de pointage (200a) est pressée, modifiant un canal d'émission ou un volume sur la première image sans affichage du premier objet (1530) sur la première image.

5. Procédé selon la revendication 1, comprenant en outre, lorsqu'une touche prédéterminée d'une télécommande (200b), différente du dispositif de pointage (200a), est pressée, affichant un second objet (1910) indiquant une information d'émission incluant au moins une information parmi une information de canal, un titre de programme ou un temps actualisé sur la première image.

6. Procédé selon la revendication 5, dans lequel :
le premier objet (1530) est affiché si une touche Ok du dispositif de pointage (200a) est pressée, et
le second objet (1910) est affiché si une touche Ok de la télécommande est pressée.

7. Appareil d'affichage d'image comprenant :
un dispositif de pointage (200a) configuré pour délivrer un signal de pointage ;
un affichage (180) ; et
un système de contrôle (170) configuré pour contrôler l'affichage afin qu'il affiche une première et une deuxième images (1510, 1520) respectivement visualisables par un premier et un second utilisateurs sur l'affichage dans un mode d'affichage multi-images,
afficher un pointeur basé sur un signal de pointage reçu à partir d'un dispositif de pointage (200a), dans lequel le pointeur est affiché sur la deuxième image des première et deuxième images (1510, 1520),
afficher (S1125) un premier objet (1530) incluant au moins un élément parmi un élément de contrôle de volume, un élément de contrôle de canal ou un élément d'entrée externe en fonction d'une manipulation d'une première touche (291) du dispositif de pointage (200a), dans lequel le premier objet (1530) est affiché uniquement sur la deuxième image,
modifier un canal d'émission de la deuxième image (1520) et afficher une image d'émission (1540) du canal modifié, lorsqu'un élément de contrôle de canal est choisi par le pointeur (205) basé sur le signal de pointage reçu à partir du dispositif de pointage (200a),
modifier un canal d'émission de la première image (1510) et afficher d'une troisième image (1710) du canal modifié en fonction de la manipulation d'une touche de contrôle de canal (296a) du dispositif de pointage (200a).

8. Appareil d'affichage d'image selon la revendication 7, dans lequel, lorsque l'élément de contrôle de volume du premier objet (1530) est choisi, le système de contrôle (170) effectue (S1135) un contrôle du volume de la deuxième image (1520).

9. Appareil d'affichage d'image selon la revendication 7, dans lequel, lorsque la touche de contrôle de canal ou une touche de contrôle de volume du dispositif de pointage (200a) sont pressées, le système de contrôle (170) modifie un canal d'émission ou un volume sur la première image (1510) sans afficher le premier objet (1530) sur la première image.

10. Appareil d'affichage d'image selon la revendication 7, dans lequel :
lorsqu'une touche prédéterminée d'une télécommande 200b, différente du dispositif de pointage (200a), est pressée, le système de contrôle (170) contrôle l'affichage afin qu'il affiche un second objet (1910) indiquant une information d'émission incluant au moins une information parmi une information de canal, un titre de programme ou un temps actualisé sur la première image.

11. Appareil d'affichage d'image selon la revendication 10, dans lequel :
le système de contrôle (170) contrôle l'affichage afin qu'il affiche le premier objet (1530) si une touche Ok du dispositif de pointage (200a) est pressée, et le système de contrôle (170) contrôle l'affichage afin qu'il affiche le second objet (1910) si une touche Ok de la télécommande (200b) est pressée.

12. Appareil d'affichage d'image selon la revendication 7, comprenant en outre :
un premier dispositif de visualisation (195a) configuré pour permettre au premier utilisateur de visualiser uniquement la première image (1510) ; et
un second dispositif de visualisation (195b) configuré pour permettre au second utilisateur de visualiser uniquement la deuxième image (1520),
dans lequel le premier dispositif de visualisation (195a) comprend un verre pour l'oeil gauche et un verre pour l'oeil droit polarisés dans la même direction.
